# EUROPEAN PATENT SPECIFICATION

(11) **EP 4 404 435 B1**
(45) Date of publication and mention of the grant of the patent: **23.09.2026**
(21) Application number: 22959051.8
(22) Date of filing: 20.09.2022
(51) Int. Cl.: H02K 3/04, H02K 21/24, H02K 1/16, H02K 3/12, H02K 3/28, H02K 3/50, H02K 15/085

(54) **ELECTRIC MOTOR, STATOR, AND MANUFACTURING METHOD FOR STATOR**
ELEKTROMOTOR, STATOR UND HERSTELLUNGSVERFAHREN FÜR STATOR
MOTEUR ÉLECTRIQUE, STATOR ET PROCÉDÉ DE FABRICATION DE STATOR

(43) Date of publication of application: 24.07.2024
(73) Proprietor: Contemporary Amperex Intelligence Technology (Shanghai) Limited, Shanghai 201306 (CN)
(72) Inventor: WU, Kai, Shanghai 200120 (CN)
(74) Representative: Gong, Jinping
(86) International application number: PCT/CN2022/120033
(87) International publication number: WO 2024/060039

(56) References cited:
- WO-A1-2021/143121
- CN-U- 211 629 956
- DE-A1- 102021 101 925
- DE-A1- 102021 124 994
- GB-A- 2 358 523
- JP-A- 2010 284 001
- JP-A- 2015 173 561
- JP-A- 2016 005 350
- US-A- 3 549 928
- US-A1- 2016 329 766
- US-A1- 2016 329 766

## Description

The present disclosure relates to the field of power devices, and more particularly, to a stator as specified in claim 1, a motor as specified in claim 11, and a manufacturing method of a stator as specified in claim 12.

### BACKGROUND

Motors have become an important measure to facilitate lightweighting of vehicles, increase recharge mileages of electric vehicles, improve space utilization of the vehicles, and reduce costs of power assemblies.

How to simplify a structure of the motor and to improve an assembly efficiency of the motor is an important research direction in the field of the motors.

GB 2 358 523 A discloses an electronically commutated electrical machine.

WO 2021/143121 A1 discloses an axial magnetic field motor and a stator assembly.

DE 10 2021 124994 A1 discloses a stator for an electric rotating machine.

US 2016/329766 A1 discloses a stator coil and an axial gap-type rotating electric machine.

### SUMMARY

The claimed subject-matter is defined by the appended claims. The present disclosure provides a motor, a stator, and a manufacturing method of a stator, which can simplify a structure of the motor and improve an assembly efficiency of the motor.

The invention as defined in claim 1 provides a stator of a motor. The stator according to the invention includes a stator core and a stator winding. The stator core has a plurality of winding slots formed at an end surface of the stator core in an axial direction of the stator core and arranged at intervals in a circumferential direction of the stator core. Each of the plurality of winding slots radially passes through an inner wall and an outer wall of the stator core. The stator winding includes at least one coil unit, and each of the at least coil unit includes a plurality of first conductors assembled together. Each of the plurality of first conductors includes at least one insertion portion inserted into a corresponding one of the plurality of winding slots.

In the above technical solution, the stator includes the stator core and the stator winding, and the coil unit of the stator winding is embedded in the winding slots of the stator core. The coil unit is formed by assembling and connecting the plurality of first conductors. Therefore, when mounting the stator winding at the stator core, the plurality of first conductors may be connected to each other in advance to form the coil unit, and then the coil unit is arranged at the stator core as a hole. In this way, a wire embedding process can be simplified, and batch automated production can be easily realized. Further, the structure and assembly steps of the motor can be simplified, and the assembly efficiency of the motor can be improved. The plurality of first conductors of the coil unit may be connected to each other to form a distributed winding. As a result, high efficiency in electromagnetism is achieved, space harmonics are reduced, and NVH (Noise, Vibration, and Harshness) and other technical effects are improved.

According to the invention, the plurality of first conductors of the coil unit are offset from each other in the circumferential direction of the stator core. Each of the plurality of first conductors includes a first insertion portion and a second insertion portion connected to each other. The first insertion portion and the second insertion portion are inserted into different winding slots of the plurality of winding slots. In one winding slot, the first insertion portion of one first conductor and the second insertion portion of another first conductor are stacked together.

In the above technical solution, the first insertion portion and the second insertion portion of the first conductor are inserted into different winding slots, which can improve a stability of a relative position of the first conductor and the stator core. The insertion portions of the two first conductors of the coil unit are stacked together, allowing the two first conductors to be stacked and embedded with each other, thereby improving a stability of relative positions among the plurality of first conductors of the coil unit. Therefore, the embodiments of the present disclosure can not only simplify the structure of the motor and improve the assembly efficiency of the motor, but also improve the stability of the relative positions between components in the stator and prolong service life of the stator.

According to the invention, the first insertion portion and the second insertion portion of one first conductor are arranged in the circumferential direction of the stator core. In one of the plurality of winding slots, the first insertion portion of one first conductor of the coil unit is located at a side of the second insertion portion of another first conductor of the coil unit close to a bottom wall of the winding slot.

In the above technical solution, in one of the plurality of winding slots, the first insertion portion of the first conductor is closer to the bottom wall of the winding slot, allowing the plurality of first conductors to be sequentially woven, stacked, and embedded to form a coil unit with two winding layers. The first insertion portion of the first conductor is located at one of the two winding layers, and the second insertion portion is located at another one of the two winding layers. The plurality of first conductors can be embedded in each other and limited by each other to improve the stability of relative positions among the plurality of first conductors of the coil unit.

In some embodiments, a span between the first insertion portion and the second insertion portion of one first conductor is equal to a pole pitch, which can simplify a winding structure of the first conductors.

In some embodiments, the stator winding includes a plurality of coil units stacked together in the axial direction of the stator core.

In the above technical solution, magnetic flux of the stator can be increased by providing the plurality of coil units.

According to the invention, the first insertion portion and the second insertion portion of one first conductor are arranged in the circumferential direction of the stator core. Each of the plurality of first conductors further includes a connection portion connecting the first insertion portion and the second insertion portion.

In the above technical solution, the first insertion portion and the second insertion portion can be connected through the connection portion.

In some embodiments, the connection portion is located at a side of the first insertion portion and the second insertion portion facing towards a center of the stator core. By providing the connection portion at an inner side of the stator core, the welding of the plurality of conductors at the inner side of the stator core can be reduced, thereby lowering process difficulty.

In some embodiments, the connection portion includes a first connection section and a second connection section. The first connection section extends from an end of the first insertion portion close to the center of the stator core. The first connection section is inclined and bent towards the second insertion portion. The second connection section extends from an end of the second insertion portion close to the center of the stator core. The second connection section is inclined and bent towards the first insertion portion. The first connection section is connected to the second connection section.

In the above technical solution, the first connection section and the second connection section are formed by extending towards each other, which can reduce a total dimension of the connection portion and reduce a dimension of a space occupied by the connection portion at the center of the stator core.

In some embodiments, the connection portion further includes a bent section connecting the first connection section and the second connection section.

In the above technical solution, by providing the bent section, a distance between the first insertion portion and the second insertion portion in the axial direction of the stator core can be changed. In this way, the first insertion portion and the second insertion portion can be arranged at different winding layers, thereby improving the problem of a limited space at the center of the stator core. In addition, a risk of interference of different conductors when the first insertion portion and the second insertion portion are arranged across the layers can be reduced, and a risk of damage to the insulation coating of the conductors can also be reduced.

In some embodiments, the first conductor has an integral structure.

In the above technical solution, the first conductor with the integral structure has high structural strength, and the service life of the first conductor can be prolonged.

According to the invention, each of the plurality of first conductors further includes a first pin and a second pin. The first pin is connected to an end of the first insertion portion facing away from the connection portion. The second pin is connected to an end of the second insertion portion facing away from the connection portion. The coil unit includes a plurality of conductive branches. Each of the conductive branches includes the plurality of first conductors connected in series. In two adjacent first conductors of the conductive branch, the first pin of one of the two adjacent first conductors is connected to the second pin of another one of the two adjacent first conductors.

In the above technical solution, the first conductor also has the first pin and the second pin. With this arrangement, the first conductor can be connected to other first conductors by the first pin and the second pin. At least two first conductors in the conductive branch are connected to each other in series by the first pin and the second pin to form the conductive branch.

In some embodiments, in two adjacent first conductors of the conductive branch, the first pin of one of the two adjacent first conductors overlaps and is connected with the second pin of another one of the two adjacent first conductors in the axial direction of the stator core. A contact area between the first pin and the second pin can be increased, thereby ensuring a stability of the relative position of the first pin and the second pin, and improving an overcurrent of the first pin and the second pin.

In some embodiments, the first pin and the second pin are welded to each other in an overlapping region.

In the above technical solution, welding is performed in the overlapping region of the first pin and the second pin, which can improve the stability of the relative position of the first pin and the second pin and facilitate the welding operation.

In some embodiments, an overlapping and connection part between the first pin and the second pin is formed as a connection structure. The coil unit includes a plurality of connection structures arranged at intervals in the circumferential direction of the stator core.

In the above technical solution, the plurality of connection structures is arranged at intervals in the circumferential direction of the stator core, and gaps are formed between adjacent connection structures. When the first pin and the second pin are welded to each other to form the connection structure, the welding distance can be increased and the mutual influence during the welding can be improved.

In some embodiments, the stator winding includes a plurality of coil units stacked together in the axial direction of the stator core. The connection structures of two adjacent coil units of the plurality of coil units are offset from each other in the circumferential direction of the stator core.

In the above technical solution, the connection structures of two adjacent coil units are arranged at intervals in the circumferential direction of the stator core, which can increase the spacing between the connection structures of the two coil units. On the one hand, when the first pin and the second pin are welded to each other to form the connection structure, the welding distance can be increased and mutual influence during the welding can be improved. When the coil unit is inserted into the winding slots, since there is a sufficient spacing between the connection structures of different coil units, flaring and deformation processing is not required for the first pin and the second pin in the connection structure. In this way, the process complexity can be lowered, and thus the stability of the position of the first pin and the second pin can be ensured without flaring and deformation processing, thereby reducing the risk of cracking during the welding. On the other hand, an electrical clearance between the connection structures can be increased, thereby improving the safety performance of the stator.

In some embodiments, each of the plurality of first conductors further includes a first connection arm and a second connection arm. The first insertion portion is connected to the first pin by the first connection arm, and the second pin is connected to the second insertion portion by the second connection arm. In two adjacent first conductors in the circumferential direction of the stator core, the second connection arm of one of the two adjacent first conductors passes between the second pin of another one of the two adjacent first conductors and the stator core.

In the above technical solution, on the one hand, a position of the first pin may be adjusted by controlling a shape and a dimension of the first connection arm, and a position of the second pin may be adjusted by controlling a shape and a dimension of the second connection arm. As a result, the first pin and the second pin may be located at suitable positions. The second connection arm of one first conductor passes between the second pin of another first conductor and the stator core. That is, the second pin of another first conductor is located at a side of the second connection arm away from the center of the stator core. That is, the second pin is located outside the second connection arm of other conductors. When the first pin and the second pin are welded to each other, an influence of a high temperature on other components of the conductor during the welding can be reduced. Meanwhile, welding operations can be easily carried out on the first pin and the second pin.

In some embodiments, a side of the second connection arm facing away from the stator core has an avoidance recess for avoiding the second pin of another first conductor.

In the above technical solution, by forming the avoidance recess at the second connection arm, an avoidance can be provided for the second pin, to avoid the second pin and the second connection arms of other first conductors from being stacked together, thereby reducing a thickness of the coil unit in the axial direction of the stator core. By providing the avoidance recess, an end height of the stator winding can be minimized. As a result, a dimension of an outer envelope of the stator is relatively small, and thus the dimension of the motor is smaller, which facilitates the arrangement of the motor. In addition, by providing the avoidance recess, an interaction force caused by a positional interference of the second pin and the second connection arm can also be improved, affecting the stability of the position of the second pin, and thus affecting the welding strength.

In some embodiments, the second connection arm is bent where the second connection arm corresponds to the avoidance recess, and is formed as a protrusion protruding towards the stator core.

In the above embodiment, by providing the protrusion corresponding to the avoidance recesses, the second connection arm can be formed with the avoidance recess and the protrusion through bending process, allowing a forming process of the second connection arm to be simple.

In some embodiments, the first pin and the second pin are formed by radially extending away from the center of the stator core. According to the invention, the overlapped first pin and second pin are formed by extending towards each other in the circumferential direction of the stator core.

In the above embodiment, when the first pin and the second pin are formed by radially extending away from the center of the stator core, a spacing between the first pin and the second pin and components such as the first insertion portion can be increased. When the overlapped first pin and second pin are welded to each other, the influence of the high temperature on other components can be reduced. When the overlapped first pin and second pin are formed by extending towards each other in the circumferential direction of the stator core, a shape of the first conductor can be simplified, and a dimension of the first conductor can be reduced, thereby reducing a height of the coil unit away from the end of the stator core. As a result, the dimension of the outer envelope of the stator can be reduced, and the weight of the first conductor can also be reduced, which facilitates the arrangement of the stator.

In some embodiments, each of the coil unit further includes a second conductor. The second conductor includes one insertion portion inserted into the winding slot. In this way, the structure of the second conductor can be simplified, which facilitates manufacturing of the second conductor.

In some embodiments, each of the plurality of first conductors includes one insertion portion; or each of the plurality of first conductors is bent continuously and includes at least three insertion portions. The at least three insertion portions of each of the plurality of first conductors are inserted into different winding slots, respectively.

In the above embodiment, three insertion portions of one first conductor are inserted into different winding slots, which can increase a contact area between the third conductor and the stator core, and improve the stability of the relative position between the first conductor and the stator core.

In some embodiments, two end surfaces of the stator core in the axial direction of the stator core both have the plurality of winding slots.

In the above embodiment, by forming the plurality of winding slots at two sides of the stator core in the axial direction thereof, the stator windings can be embedded at different sides of the stator core, and the same stator core can accommodate more coil units.

According to the invention, each of the plurality of winding slots includes a bottom wall surface, two side wall surfaces connected to the bottom wall surface, and two inclined surfaces respectively connected to the two side wall surfaces. The two side wall surfaces are spaced apart from each other in the circumferential direction of the stator core. A slot opening is formed between ends of the two inclined surfaces facing away from the respective side wall surfaces.

In the above embodiment, by connecting the inclined surface to the side wall surface, a dimension of the slot opening can be increased to facilitate embedding the coil unit in the winding slot.

In some embodiments, a dimension of the slot opening in the circumferential direction of the stator core is H1, and a spacing between the two side wall surfaces in the circumferential direction of the stator core is H2, where H1≥1.5 H2.

In the above technical solution, an extending dimension of the slot opening in the circumferential direction of the stator core is relatively great, and is greater than 1.5 times the spacing between the two side wall surfaces in the circumferential direction of the stator core. With this arrangement, the coil unit can be easily inserted into the winding slots. The efficiency of embedding the coil unit into the winding slots can be improved, and a reserved space for assembling predetermined sub-windings and gaps between the conductors can be greatly reduced, allowing a copper fullness rate to reach more than 75%.

In a second aspect, embodiments of the present disclosure provide a motor. The motor includes the stator according to any one of the embodiments.

The invention provides further as defined in claim 12 a manufacturing method of a stator. The manufacturing method includes: providing a stator core having a plurality of winding slots, the plurality of winding slots being formed at an end surface of the stator core in an axial direction of the stator core and arranged at intervals in a circumferential direction of the stator core, each of the plurality of winding slots radially passing through an inner wall and an outer wall of the stator core; and pressing a coil unit formed by pre-assembling a plurality of first conductors into the plurality of winding slots in the circumferential direction of the stator core to insert an insertion portion of each of the plurality of first conductors into a corresponding one of the plurality of winding slots.

In this embodiment, a stator core having a plurality of winding slots is first provided, and then after assembling the plurality of first conductors into the coil unit, the pre-assembled coil units are embedded into the winding slots as a whole, which can effectively improve the assembly efficiency of the stator as compared with inserting the plurality of first conductors into the winding slots one by one.

In some embodiments, prior to pressing the coil unit formed by pre-assembling the plurality of first conductors into the plurality of winding slots in the circumferential direction of the stator core to insert the insertion portion of each of the plurality of first conductors into the corresponding one of the plurality of winding slots, the manufacturing method further includes: providing a conductor of a linear shape, the conductor including a wire and an insulation coating wrapping around the wire; removing the insulation coating at two ends of the conductor; and bending the conductor to form the first conductor including two insertion portions spaced apart from each other.

In the above technical solution, the conductor is formed by directly bending a conductor of a linear shape after removing the insulation coating at two ends of the conductor without performing conductor cutting and other processes in the later stage, which can reduce the complexity of the manufacturing process of the conductor and improve the manufacturing efficiency of the stator.

In some embodiments, the stator has a pole number of 2p and a pole pitch that is n winding slots. Prior to pressing the coil unit formed by pre-assembling the plurality of first conductors into the plurality of winding slots in the circumferential direction of the stator core to insert the insertion portion of each of the plurality of first conductors into the corresponding one of the plurality of winding slots, the manufacturing method further includes: providing 2p·n first conductors, each of the 2p·n first conductors including a first insertion portion and a second insertion portion, and a span between the first insertion portion and the second insertion portion being n winding slots. Said pre-assembling the plurality of first conductors into the coil unit includes: providing an assembly mechanism including 2p·n grooves, the 2p·n grooves being evenly arranged in a circumferential direction of an assembly mechanism; stacking (2p-1)·n first conductors at the 2p·n grooves sequentially in a counterclockwise direction; and inserting remaining n first conductors into the grooves of the assembly mechanism to form a coil unit, wherein in one of the grooves, the first insertion portion of one first conductor of the coil unit is located at a side of the second insertion portion of another first conductor of the coil unit close to a bottom wall of the groove.

In the above technical solution, the span of the first insertion portion and the second insertion portion is equal to the pole pitch, which can simplify the winding structure of the first conductor. In one of the plurality of winding slots, the first insertion portion of the first conductor is closer to the bottom wall of the winding slot, allowing the plurality of first conductors to be sequentially woven, stacked, and embedded to form a coil unit with two layers of winding. The first insertion portion of the first conductor is located on one layer of the winding, and the second insertion portion is located on another layer of the winding. The plurality of first conductors can be embedded in each other and limited to improve the stability of relative positions among the plurality of first conductors in the coil unit.

### BRIEF DESCRIPTION OF THE DRAWINGS

In order to clearly illustrate technical solutions of embodiments of the present disclosure, a brief description of the accompanying drawings used in embodiments of the present disclosure is given below. Obviously, the drawings in the following descriptions are only part embodiments of the present disclosure, and for those ordinary skill in the art, other drawings can be obtained according to these accompanying drawings without creative labor.
FIG. 1 is a schematic structural view of a stator of a motor according to some embodiments of the present disclosure;
FIG. 2 is a schematic structural view of a stator winding of a stator according to some embodiments of the present disclosure;
FIG. 3 is a schematic structural view of a first conductor of a stator winding of a stator according to some embodiments of the present disclosure;
FIG. 4 is a schematic diagram of an assembly process of a stator according to some embodiments of the present disclosure;
FIG. 5 is a schematic structural view of a stator during an assembly process according to some embodiments of the present disclosure;
FIG. 6 is a schematic structural view of a stator according to some embodiments of the present disclosure in another direction;
FIG. 7 is a schematic structural view of a stator according to some embodiments of the present disclosure in another direction;
FIG. 8 is a partially enlarged schematic structural view at part A in FIG. 7;
FIG. 9 is a partial schematic structural view of a first conductor of a stator according to some embodiments of the present disclosure;
FIG. 10 is a partial schematic structural view of a first conductor of a stator according to other embodiments of the present disclosure;
FIG. 11 is a partial schematic structural view of a first conductor of a stator according to some embodiments of the present disclosure;
FIG. 12 is a partial schematic structural view of a coil unit of a stator according to some embodiments of the present disclosure;
FIG. 13 is a schematic structural view of a first conductor of a stator according to other embodiments of the present disclosure;
FIG. 14 is a schematic structural view of the first conductor of the stator shown in FIG. 13 in another direction;
FIG. 15 is a partial schematic structural view of the first conductor of the stator shown in FIG. 13;
FIG. 16 is a schematic structural view of a first conductor of a stator according to some embodiments of the present disclosure;
FIG. 17 is a schematic structural view of the first conductor of the stator shown in FIG. 16 in another direction;
FIG. 18 is a partial schematic structural view of the first conductor of the stator shown in FIG. 16;
FIG. 19 is a schematic structural view of a second conductor of a stator according to some embodiments of the present disclosure;
FIG. 20 is a schematic structural view of a first conductor of a stator according to some embodiments of the present disclosure;
FIG. 21 is a schematic structural view of a stator including the first conductor shown in FIG. 14 according to some embodiments of the present disclosure;
FIG. 22 is a schematic diagram of a stator core of a stator according to other embodiments of the present disclosure;
FIG. 23 is a schematic diagram of a stator according to other embodiments of the present disclosure;
FIG. 24 is a side view of a stator according to other embodiments of the present disclosure;
FIG. 25 is a partial cross-sectional view of a stator core of a stator according to some embodiments of the present disclosure; and
FIG. 26 is a schematic flow diagram of a manufacturing method of a stator according to some embodiments of the present disclosure.

In the accompanying drawings, the accompanying drawings are not to scale.

Explanation of reference numerals:
100, stator core; 110, end surface; 120, winding slot; 121, bottom wall surface; 122, side wall surface; 123, inclined surface; 124, slot opening;
200, stator winding; 200a, coil unit; 201, conductive branch; 2011, insertion portion; 210, first conductor; 211, first insertion portion; 212, second insertion portion; 213, connection portion; 213a, first connection section; 213b, second connection section; 213c, bent section; 214, first pin; 215, second pin; 2145, connection structure; 216, first connection arm; 217, second connection arm; 217a, avoidance recess; 217b, protrusion; 218, welding protrusion; 220, second conductor; 221, connection section.

### DETAILED DESCRIPTION

In order to make the purpose, technical solutions, and advantages of the embodiments of the present disclosure clearer, reference will be made clearly on technical solutions in the embodiments of the present disclosure with accompanying drawings. Obviously, the embodiments described here are only part of the embodiments of the present disclosure and are not all embodiments of the present disclosure. Based on the embodiments of the present disclosure, other embodiments obtained by those of ordinary skill in the art without creative labor are within the scope of the present invention as defined in the appended claims.

Unless otherwise defined, all technical and scientific terms used in the present disclosure have the same meanings as commonly understood by those skilled in the art of the present disclosure. The terms used in the specification of the present disclosure are only for describing specific embodiments and are not intended to limit the present disclosure. The terms "including," "having," and any variations thereof in the specification, claims, and the above description of the drawings of the present disclosure are intended to cover non-exclusive inclusion. The terms "first," "second," etc. in the specification, claims, or the above description of the drawings of the present disclosure are used to distinguish different objects, rather than to describe a specific order or a primary-secondary relationship.

Reference herein to "an embodiment" means that a particular feature, structure or characteristic described in connection with the embodiment can be included in at least one embodiment of the present disclosure. The appearances of this phrase in various places in the specification are not necessarily all referring to the same embodiment, nor are separate or alternative embodiments mutually exclusive of other embodiments.

In the description of the present disclosure, it should be noted that, unless otherwise clearly specified and limited, terms such as "install," "connect," "connect to," and "attach to" should be understood in a broad sense. For example, it may be a fixed connection or a detachable connection or connection as one piece; direct connection or indirect connection through an intermediate or internal connection between two elements. For those of ordinary skill in the art, the specific meaning of the above-mentioned terms in the present disclosure can be understood according to specific circumstances.

The term "and/or" in the present disclosure is merely an association relationship describing related objects, indicating that there may exist three relationships, for example, A and/or B, which may mean: A exists alone, A and B exist simultaneously, and B exists alone. In addition, the character "/" in the present disclosure generally indicates that the related objects are in an "or" relationship.

In the embodiments of the present disclosure, the same reference numerals represent the same components, and for the sake of simplicity, detailed descriptions of the same components in different embodiments are omitted. It should be understood that the thickness, length, width and other dimensions of various components in the embodiments of the present disclosure shown in the drawings, as well as the overall thickness, length and width of the integrated device, are only exemplary illustrations and should not constitute any limitation to the present disclosure.

The term "a plurality of" appearing in the present disclosure refers to two or more (including two).

Currently, in drive motors of new energy vehicles, it has been noticed that in a stator of a motor, the existing method mostly uses a design of centralized stator windings with inclined grooves to reduce the cogging torque. However, the inclined grooves complicate a production of a wire embedding process a stator core of the motor. The existing stator has defects such as a complex structure and wire embedding process, a low assembling efficiency. As a result, it is difficulty in achieving batch and automation production.

In view of this, embodiments of the present disclosure provide a motor, a stator, and a manufacturing method of the stator, which can simplify a structure of the stator and improve an assembly efficiency of the motor by adjusting the wire embedding and winding manners of conductors.

In order to facilitate understanding, the following explanations of the professional terms appearing in the present disclosure are provided below.

A stator refers to a stationary part in a motor, and functions to generate a rotation magnetic field.

A rotor refers to a rotational member in the motor, and functions to perform a conversion between electrical energy and mechanical energy.

A span refers to a distance spanned between two edges of one element in a motor winding on a surface of an armature, and is usually expressed by the number of winding slots formed at a stator core.

A number of magnetic pole pairs P is referred to as the number of pole pairs. The magnetic poles formed after the motor winding is energized are in the form of pairs of N pole and S pole. The total number of magnetic poles is 2P.

A pole pitch refers to a distance occupied by each of magnetic poles of the motor on a circumferential surface of an air gap. The pole pitch may be expressed by the number of the winding slots of the stator core. For example, the pole pitch is Z/2P, where Z is a total number of the winding slots of the stator core.

A pole phase group refers to a group formed by connecting in series a plurality of conductors included in a same phase winding at the same pole pitch, and is also called a coil unit. The plurality of conductors in the pole phase group each have a same current direction and same electromagnetic effects, and these conductors are formed as the magnetic poles of the phase winding.

A phase winding refers to a set of windings formed by connecting one or more parallel branches in series and parallel based on a prescribed connection method.

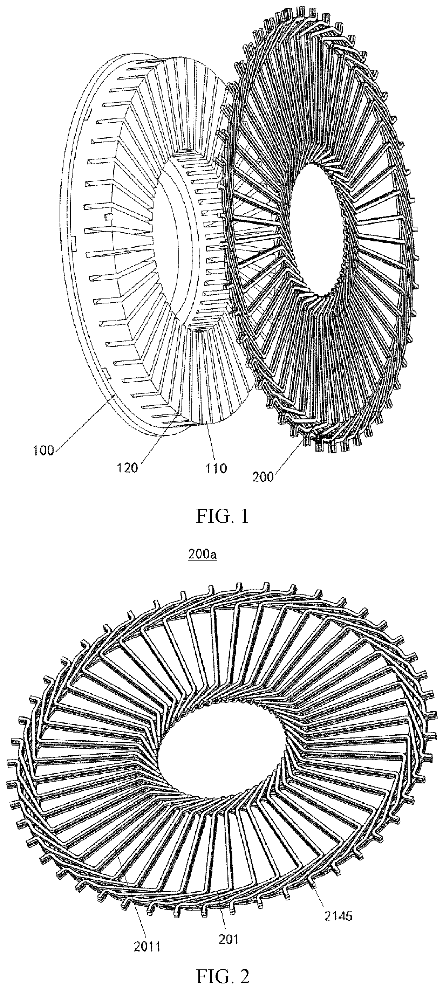

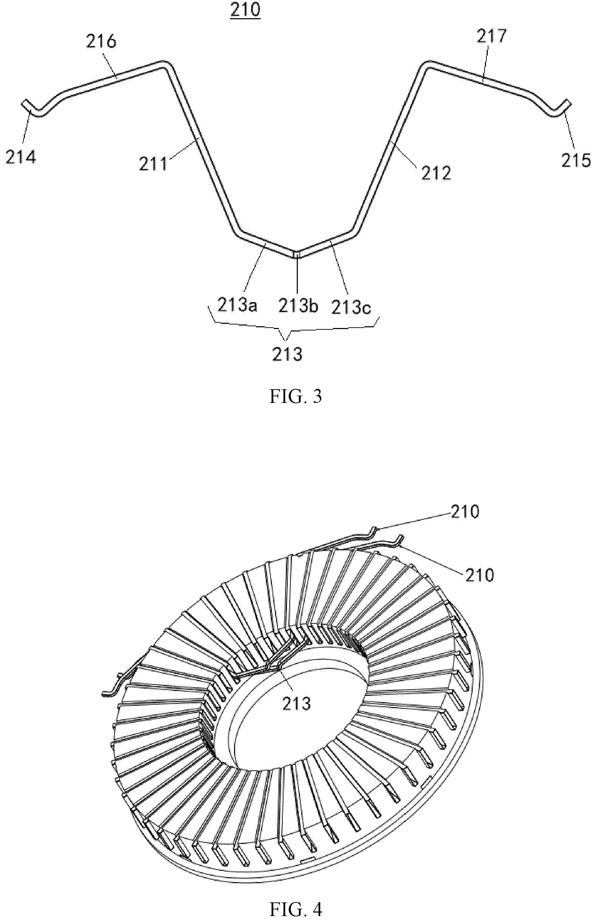

FIG. 1 is a schematic structural view of a stator according to some embodiments of the present disclosure. FIG. 2 is a schematic structural view of a stator winding 200 of a stator according to some embodiments of the present disclosure. FIG. 3 is a schematic structural view of a first conductor 210 of a stator winding 200 of a stator according to some embodiments of the present disclosure. FIG. 4 is a schematic diagram of an assembly process of a stator according to some embodiments of the present disclosure.

As shown in FIG. 1 to FIG. 4, some embodiments of the present disclosure provide a stator. The stator includes a stator core 100 and a stator winding 200. The stator core 100 has a plurality of winding slots 120 formed at an end surface 110 of the stator core 100 in an axial direction of the stator core 100. The plurality of winding slots 120 are arranged at intervals in a circumferential direction of the stator core 100. Each of the plurality of winding slots 120 radially passes through an inner wall and an outer wall of the stator core 100. The stator winding 200 includes at least one coil unit 200a, and each of the at least one coil unit 200a includes a plurality of first conductors 210 assembled together. Each of the plurality of first conductors 210 includes at least one insertion portion 2011 inserted into a corresponding one of the plurality of winding slots 120.

The winding slot 120 radially passes through the stator core 100. For example, the stator core 100 has an inner wall surface and an outer wall surface. Two ends of the winding slot 120 in a radial direction are formed as openings at the inner wall surface and the outer wall surface, respectively.

The plurality of first conductors 210 of the coil unit 200a may be assembled together through braiding, stacking, or other processes. For example, the first conductors 210 may be fixedly connected to each other, or may be limited by each other by their own structures.

The number of the insertion portions 2011 of the first conductor 210 are not limited to the embodiments of the present disclosure. The number of the insertion portions 2011 of the plurality of first conductors 210 may be the same or different. In some examples, all of the first conductors 210 have the same number of the insertion portions 2011. For example, each of the first conductors 210 may have one, two, four, eight or more insertion portions 2011. In other examples, the number of the insertion portions 2011 of some of the first conductors 210 may be different from the number of the insertion portions 2011 of other first conductors 210. For example, some of the first conductors 210 include one insertion portion 2011, some of the first conductors 210 include two insertion portions 2011, and some of the first conductors 210 include three or more insertion portions 2011. One or more coil units 200a may be provided. For example, the at least one coil unit 200a may include a plurality of coil units, and the plurality of coil units 200a may be stacked together in the axial direction of the stator core 100.

Each of the first conductors 210 may include one or more insertion portions 2011. Each of the insertion portions 2011 is an effective edge of the first conductor 210, and is embedded in the stator core 100 to function electromagnetic pole energy conversion.

The plurality of first conductors 210 may be arranged in various ways. Each of the first conductors 210 may be a flat wire or a round wire. The flat wire may have a rectangular cross section, and the round wire may have a circular cross section. The embodiments of the present disclosure will be described by taking the flat wire as an example. In other embodiments, the first conductor 210 may also be a round wire.

In an exemplary embodiment of the present disclosure, the coil unit 200a is arranged in the winding slots 120 in the axial direction. Embedding the coil unit 200a in the axial direction can provide a convenient and efficient wire embedding process.

In the above technical solution, the stator includes the stator core 100 and the stator winding 200. The coil unit 200a of the stator winding 200 is embedded in the winding slots 120 of the stator core 100. The coil unit 200a is formed by assembling and connecting the plurality of first conductors 210. Therefore, when mounting the stator winding 200 at the stator core 100, the plurality of first conductors 210 may be connected to each other in advance to form the coil unit 200a, and then the coil unit 200a is arranged at the stator core 100 as a whole. In this way, a wire embedding process can be simplified, and batch automated production can be easily achieved. Further, the structure and assembly steps of the motor can be simplified, and the assembly efficiency of the motor can be improved. The plurality of first conductors 210 of the coil unit 200a may be connected to form a distributed winding. As a result, high efficiency in electromagnetism can be achieved, space harmonics can be reduced, and NVH (Noise, Vibration, and Harshness) and other technical effects can be improved.

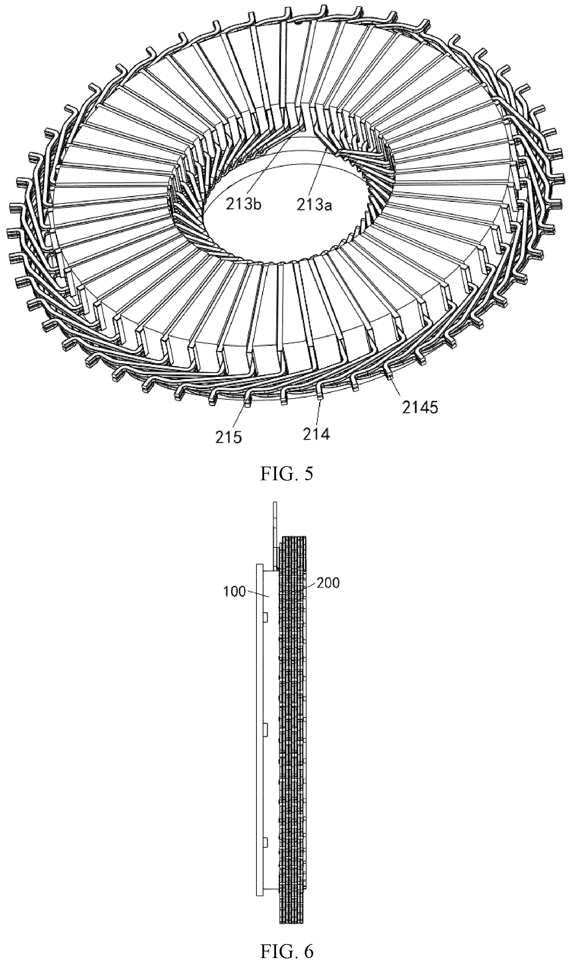

Reference may be made to FIG. 2 to FIG. 5, in which FIG. 5 is a schematic structural view of a stator during an assembly process according to some embodiments of the present disclosure.

According to the invention, as shown in FIG. 2 to FIG. 5, the plurality of first conductors 210 of the coil unit 200a are offset from each other in the circumferential direction. Each of the plurality of first conductors 210 includes a first insertion portion 211 and a second insertion portion 212 connected to each other. The first insertion portion 211 and the second insertion portion 212 are respectively inserted into different winding slots 120. In one winding slot 120, the first insertion portion 211 of one first conductor 210 and the second insertion portion 212 of another first conductor 210 of the coil unit 200a are stacked together.

The plurality of first conductors 210 are offset from each other in the circumferential direction, which means that any two of the plurality of first conductors 210 do not completely overlap with each other in the axial direction, and the plurality of first conductors 210 are at least partially offset from each other in the circumferential direction. For example, as shown in FIG. 5, two adjacent first conductors 210 are offset from each other by one winding slot 120 in the circumferential direction.

The first insertion portion 211 of one first conductor 210 and the second insertion portion 212 of the other first conductor 210 of the coil unit 200a are stacked together means that the first insertion portion of one first conductor 210 and the second insertion portion 212 of the other first conductor 210 of the coil unit 200a are stacked together in the axial direction of the stator core 100.

In the above technical solution, the first insertion portion 211 and the second insertion portion 212 of the first conductor 210 are respectively inserted into different winding slots 120, which can improve a stability of a relative position of the first conductor 210 and the stator core 100. The first insertion portion of one first conductor 210 and the second insertion portion 212 of the other first conductor 210 of the coil unit 200a are stacked together, allowing the two first conductors 210 to be stacked and embedded in each other, thereby improving stability of relative positions among the plurality of first conductors 210 of the coil unit 200a. Therefore, the embodiments of the present disclosure can not only simplify the structure of the motor and improve the assembly efficiency of the motor, but also improve the stability of the relative positions between components in the stator to prolong the service life of the stator.

In some embodiments, as shown in FIG. 1 to FIG. 5, the first insertion portion 211 and the second insertion portion 212 of one first conductor 210 are arranged in the circumferential direction. In one of the plurality of winding slots 120, the first insertion portion 211 of one first conductor 210 of the coil unit 200a is located at a side of the second insertion portion 212 of the other first conductor 210 of the coil unit 200a close to a bottom wall of the winding slot 120.

The circumferential direction may be a clockwise or counterclockwise direction.

In an exemplary embodiment of the present disclosure, as shown in FIG. 4 and FIG. 5, one or more winding slots 120 may also be arranged between the winding slot 120 corresponding to the first insertion portion 211 and the winding slot 120 corresponding to the second insertion portion 212. In the above technical solution, the first conductor 210 spans across several winding slots 120 by means of the first insertion portion 211 and the second insertion portion 212. On the one hand, a dimension of the first conductor 210 can be increased. On the other hand, at least part of other first conductors 210 of one coil unit 200a may be inserted into these several winding slots 120, allowing the plurality of first conductors 210 to be embedded with each other, and thus improving the stability of the relative positions among the plurality of first conductors 210.

In the above technical solution, in one of the plurality of winding slots 120, the first insertion portion 211 of the first conductor 210 is closer to the bottom wall of the winding slot 120, allowing the plurality of first conductors 210 to be sequentially woven, stacked, and embedded to form a coil unit 200a with two layers of winding. In this case, the first insertion portion 211 of the first conductor 210 is located on one layer of the winding, and the second insertion portion 212 is located on another layer of the winding. The plurality of first conductors 210 may be embedded in each other and limited by each other to improve the stability of relative positions among the plurality of first conductors 210 of the coil unit 200a.

In the stator according to the embodiments of the present disclosure, the coil unit 200a of the stator winding 200 may be considered to include two layers of windings, and the first insertion portion 211 and the second insertion portion 212 of one first conductor 210 are located in different layers of the windings, respectively. For example, the coil unit 200a includes an upper winding layer and a lower winding layer. The first insertion portion 211 of one first conductor 210 may be located at the lower winding layer, and the second insertion portion 212 may be located at the upper winding layer. In this way, the plurality of first conductors 210 can be embedded with each other. The lower winding layer is, for example, a winding layer close to the bottom wall of the winding slot 120. The upper winding layer is, for example, a winding layer away from the bottom wall of the winding slot 120. In other embodiments, the first insertion portion 211 of one first conductor 210 may also be located at the upper winding layer, and the second insertion portion 212 may be located at the lower winding layer.

In some embodiments, as shown in FIG. 4 and FIG. 5, a span between the first insertion portion 211 and the second insertion portion 212 of one first conductor 210 is equal to a pole pitch, which can simplify a winding structure of the first conductors 210. For example, when the span between the first insertion portion 211 and the second insertion portion 212 of one first conductor 210 is equal to six winding slots 120, the pole pitch is six winding slots 120.

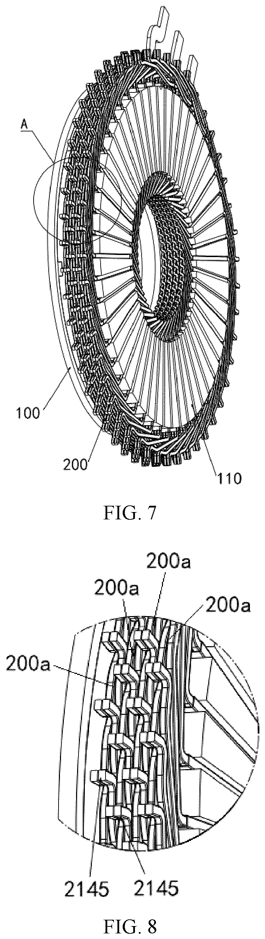

FIG. 6 is a schematic structural view of a stator according to some embodiments of the present disclosure in another direction. FIG. 7 is a schematic structural view of a stator according to some embodiments of the present disclosure in another direction. FIG. 8 is a partially enlarged schematic structural view at part A in FIG. 7.

In some embodiments, as shown in FIG. 1 to FIG. 8, the stator winding 200 includes a plurality of coil units 200a stacked together in the axial direction of the stator core 100.

In the above technical solution, magnetic flux of the stator can be increased by providing the plurality of coil units 200a.

When the stator winding 200 includes the plurality of coil units 200a, the plurality of coil units 200a can be inserted into the winding slots 120 of the stator core 100 in a single step. In another embodiment of the present disclosure, the plurality of coil units 200a may be inserted into the winding slots 120 of the stator core 100 in several steps, and in this case, one coil unit 200a is inserted into the winding slots 120 of the stator core 100 in each step. When inserting one coil unit 200a into the winding slots 120 of the stator core 100, the plurality of first conductors 210 may be connected to form one coil unit 200a first, and then the coil unit 200a is inserted into the plurality of winding slots 120 of the stator core 100 as a whole. In another embodiment of the present disclosure, the plurality of first conductors 210 may be inserted into the winding slots 120 in several steps, and in this case, one first conductor 210 is inserted into the winding slots 120 of the stator core 100 in each step.

According to the invention, as shown in FIG. 1 to FIG. 8, the first insertion portion 211 and the second insertion portion 212 of one first conductor 210 are arranged in the circumferential direction. Each of the plurality of first conductors 210 further includes a connection portion 213 connecting the first insertion portion 211 and the second insertion portion 212.

In an exemplary embodiment of the present disclosure, the connection portion 213, the first insertion portion 211, and the second insertion portion 212 may be integrally formed. In other embodiments, the connection portion 213 may also be separated from the first insertion portion 211 and the second insertion portion 212.

In the above technical solution, the first insertion portion 211 and the second insertion portion 212 can be connected by the connection portion 213.

In some embodiments, the connection portion 213 is located at a side of the first insertion portion 211 and the second insertion portion 212 facing towards a center of the stator core 100.

In the above technical solution, by arranging the connection portion 213 at the inner side of the stator core 100, the welding of the plurality of first conductors 210 at the inner side of the stator core 100 can be reduced, thereby lowering process difficulty.

In some embodiments, as shown in FIG. 1 to FIG. 8, the connection portion 213 includes a first connection section 213a and a second connection section 213b. The first connection section 213a extends from an end of the first insertion portion 211 close to the center of the stator core 100. The first connection section 213a is inclined and bent towards the second insertion portion 212. The second connection section 213b extends from an end of the second insertion portion 212 close to the center of the stator core 100. The second connection section 213b is inclined and bent towards the first insertion portion 211. The first connection section 213a is connected to the second connection section 213b.

In the above technical solution, the first connection section 213a and the second connection section 213b are formed by extending towards each other. As a result, a total dimension of the connection portion 213 can be reduced, thereby reducing a size of a space occupied by the connection portion 213 in the center of the stator core 100.

In an exemplary embodiment of the present disclosure, in two adjacent first conductors 210 of one coil unit 200a, the first connection section 213a of one of the two adjacent first conductors 210 and the second connection section 213b of the other one of the two adjacent first conductors 210 overlap with each other and are stacked together in the axial direction. As a result, the first connection section 213a and the second connection section 213b of the two adjacent first conductors 210 are limited by each other. Therefore, the stability of the relative positions among the plurality of first conductors 210 can be improved.

In an exemplary embodiment of the present disclosure, in three adjacent first conductors 210 of one coil unit 200a in the circumferential direction, the first connection section 213a of one of the three adjacent first conductors 210 is located at a side of the second connection section 213b of the previous first conductor 210 close to the bottom wall of the winding slot 120, and the second connection section 213b of the one of the three adjacent first conductors 210 is located at a side of the first connection section 213a of the subsequent first conductor 210 away from the bottom wall of the winding slot 120.

In the above solution, in the phase "the first connection section 213a of one of the three adjacent first conductors 210 is located at a side of the second connection section 213b of the previous first conductor 210 close to the bottom wall of the winding slot 120", the positional relationship between the first connection section 213a and the second connection section 213b in the axial direction will be described only by taking the bottom wall of the winding slot 120 as a reference. Similarly, in the phase "the second connection section 213b of the one of the three adjacent first conductors 210 is located at a side of the first connection section 213a of the subsequent first conductor 210 away from the bottom wall of the winding slot 120," the positional relationship between the second connection section 213b and the first connection section 213a will be described only by taking the bottom wall of the winding slot 120 as a reference.

As mentioned above, the circumferential direction may be the clockwise or counterclockwise direction. When the circumferential direction is the clockwise direction, the first conductor 210 located in front of one of the first conductors 210 is the first conductor 210 located at a side of the one of the first conductors 210 in the counterclockwise direction, and the first conductor 210 located behind one of the first conductors 210 is the first conductor 210 located at a side of the one of the first conductors 210 in the clockwise direction.

In the embodiments of the present disclosure, in three first conductors 210 of one coil unit 200a arranged in the circumferential direction, the three first conductors 210 sequentially include for example a conductor X1, a conductor X2, and a conductor X3 in the circumferential direction. The first connection section 213a of the conductor X2 is located at a side of the second connection section 213b of the conductor X1 facing towards the bottom wall of the winding slot 120. The second connection section 213b of the conductor X2 is located at the side of the first connection section 213a of the conductor X3 away from the bottom wall of the winding slot 120. That is, the second connection section 213b of the conductor X2 is pressed against the first connection section 213a of the conductor X3 towards the bottom wall of the winding slot 120, and the first connection section 213a of the conductor X1 is pressed against the second connection section 213b of the conductor X2 toward the bottom wall of the winding slot 120. That is, the first connection section 213a of the conductor X2 is pressed, and the second connection section 213b of the conductor X2 is pressed against another first connection section 213a. In this way, the plurality of first conductors 210 can be embedded in each other sequentially.

In an exemplary embodiment of the present disclosure, the conductor X1, the conductor X2, and the conductor X3 may be arranged adjacent to each other, or other first conductors 210 may be interposed between the conductor X1 and the conductor X2, and other first conductors 210 may be interposed between the conductor X2 and the conductor X3.

In some embodiments, the plurality of first conductors 210 are offset from each other in the circumferential direction. The first connection section 213a of one first conductor 210 is located at a side of the second connection sections 213b of the previous plurality of first conductors 210 close to the bottom wall of the winding slot 120, and the second connection section 213b of the first conductor 210 is located at a side of the first connection sections 213a of the subsequent plurality of first conductors 210 away from the bottom wall of the winding slot 120.

In the above technical solution, the first connection section 213a of the first conductor 210 is pressed towards the bottom wall of the winding groove 120 by the second connection sections 213b of several other first conductors 210, and the second connection section 213b of the first conductor 210 is presses against the first connection sections 213a of several other first conductors 210 towards the bottom wall of the winding groove 120. The plurality of first conductors 210 are stacked and embedded sequentially, which can improve the stability of the relative positions among the plurality of first conductors 210.

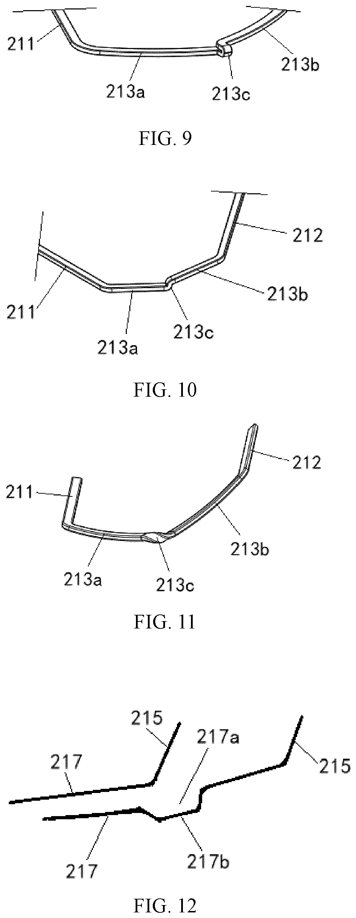

Reference may be made to FIG. 3 to FIG. 11, in which FIG. 9 is a partial schematic structural view of a first conductor of a stator according to some embodiments of the present disclosure, FIG. 10 is a partial schematic structural view of a first conductor of a stator according to other embodiments of the present disclosure, and FIG. 11 is a partial schematic structural view of a first conductor of a stator according to some embodiments of the present disclosure.

In some embodiments, as shown in FIG. 3 to FIG. 11, the connection portion 213 further includes a bent section 213c connecting the first connection section 213a and the second connection section 213b.

The bent section 213c may be provided in various ways. As shown in FIG. 9 to FIG. 11, the bent section 213c may be formed by twisting, folding, or bending the first connection section 213a relative to the second connection section 213b. That is, the bent section 213c may be in the form of a twisted shape, a folded shape, or a step shape.

In the above technical solution, by providing the bent section 213c, a distance between the first insertion portion 211 and the second insertion portion 212 in the axial direction can be changed, which can position the first insertion portion 211 and the second insertion portion 212 at different winding layers, thereby improving the limited space at the center of the stator core 100. In addition, the risk of interference of different first conductors 210 when the first insertion portion 211 and the second insertion portion 212 are arranged across the layers and the risk of damage to the insulation coating of the first conductor 210 can be reduced.

In some embodiments, the first conductor 210 has an integral structure. For example, the first insertion portion 211, the second insertion portion 212, and the connection portion 213 are integrally formed.

In an exemplary embodiment of the present disclosure, the first insertion portion 211, the second insertion portion 212, and the connection portion 213 are integrally formed into a U-shaped structure. The first insertion portion 211 and the second insertion portion 212 are two wall parts of the U-shaped structure, and the connection portion 213 is a bottom part of the U-shaped structure.

In the above technical solution, when the first conductor 210 has an integral structure, for example, the first insertion portion 211, the second insertion portion 212, and the connection portion 213 are integrally formed, the first conductor 210 has high structural strength, which can prolong the service life of the first conductor 210.

In an exemplary embodiment of the present disclosure, the first insertion portion 211, the second insertion portion 212, and the connection portion 213 that are integrally formed are formed by a deformation of the conductor. For example, when the first conductor 210 is a flat wire, the first conductor 210 may be formed by peeling a coating of a rectangular conductor, blanking, and then molding. In addition, the first conductor 210 may be formed by laser-peeling a coating of a rolled rectangular conductor, accurately blanking, and then performing 3D molding on the blanked rectangular conductor. The first conductor 210 formed through a single 3D stamping molding is then assembled in the winding slots 120. Since the blanking, coating peeling, and 3D molding processes of the first conductor 210 formed through the D3 molding are easily controlled, a conductor cutting is not required. As a result, the process complexity can be lowered, and the production line operation efficiency can be improved.

According to the invention, as shown in FIG. 3 to FIG. 8, each of the plurality of first conductors 210 further includes a first pin 214 and a second pin 215. The first pin 214 is connected to an end of the first insertion portion 211 facing away from the connection portion 213. The second pin 215 is connected to an end of the second insertion portion 212 facing away from the connection portion 213. The coil unit 200a includes a plurality of conductive branches 201, and each of the conductive branches 201 includes several first conductors 210 connected in series. In two adjacent first conductors 210 of the conductive branch 201, the first pin 214 of one of the two adjacent first conductors 210 is connected to the second pin 215 of the other one of the two adjacent first conductors 210.

In an exemplary embodiment of the present disclosure, the first pin 214 and the second pin 215 are formed by extending away from the center of the stator core 100 in the radial direction of the stator core 100.

In the above technical solution, the first conductor 210 also has the first pin 214 and the second pin 215. With this arrangement, the first conductor 210 can be connected to other first conductors 210 by means of the first pin 214 and the second pin 215. At least two first conductors 210 of the coil unit 200a are connected in series by means of the first pin 214 and the second pin 215 to form the conductive branch 201.

In some embodiments, as shown in FIG. 3 to FIG. 8, in two adjacent first conductors 210 of the conductive branch 201, the first pin 214 of one of the two adjacent first conductors 210 overlaps and connected with the second pin 215 of another one of the two adj acent first conductors 210 in the axial direction. In this way, a contact area between the first pin 214 and the second pin 215 can be increased. As a result, a stability of the relative position of the first pin 214 and the second pin 215 can be ensured. In addition, an overcurrent of the first pin 214 and the second pin 215 can be increased.

In an exemplary embodiment of the present disclosure, in at least two first conductors 210, the first pin 214 of one of the at least two first conductors 210 and the second pin 215 of the other one of the at least two conductors 210 completely overlap and are connected with each other in the axial direction of the stator core 100.

In the above technical solution, two first conductors 210 completely overlap with each other through the first pin 214 and the second pin 215. In this way, the contact area between the first pin 214 and the second pin 215 can be increased, thereby ensuring a sufficient overcurrent area between the two first conductors 210. In addition, the first conductors 210 may also be connected in series to form a complete conductive branch 201 by means of the first pin 214 and the second pin 215.

In an exemplary embodiment of the present disclosure, in two adjacent first conductors 210 of the conductive branch 201, the first pin 214 and the second pin 215 are welded to each other in an overlapping region. Exemplarily, the first pin 214 and the second pin 215 are welded through TIG (Tungsten Inert Gas Welding) welding, laser welding, or other welding.

In some embodiments, during the welding, identification of automatic welding may be achieved by axially rotating the stator or a welding head. The welding may be implemented by performing single-point welding or multi-point simultaneously. As a result, the production efficiency is high. The welded part of the pre-formed coil unit 200a has a good position. During the welding, the first conductor 210 is in a natural state, and thus a resilience force and an internal stress are small, thereby reducing the risk of cracking.

In some embodiments, as shown in FIG. 3 to FIG. 8, an overlapping and connection part between the first pin 214 and the second pin 215 is formed as a connection structure 2145. The coil unit 200a includes a plurality of connection structures 2145 arranged at intervals in the circumferential direction.

The connection structure 2145 refers to an overlapping part between the first pin 214 and the second pin 215 connected to each other. In an exemplary embodiment of the present disclosure, the first pin 214 and the second pin 215 may be welded to each other in a region where the connection structure 2145 is located.

In the above technical solution, the plurality of connection structures 2145 are arranged at intervals in the circumferential direction, and gaps are formed between adjacent connection structures 2145. When the first pin 214 and the second pin 215 are welded to each other to form the connection structure 2145, a welding distance can be increased, thereby improving mutual influence during the welding.

In some embodiments, as shown in FIG. 3 to FIG. 8, the stator winding 200 includes a plurality of coil units 200a stacked together in the axial direction. The connection structures 2145 of two adjacent coil units 200a of the plurality of coil units 200a are offset from each other in the circumferential direction.

In the above technical solution, the connection structures 2145 of two adjacent coil units 200a are arranged at intervals in the circumferential direction, which can increase a spacing between the connection structures 2145 of the two coil units 200a. On the one hand, when the first pin 214 and the second pin 215 are welded to each other to form the connection structure 2145, the welding distance can be increased, thereby improving mutual influence during the welding. When the coil unit 200a is inserted into the winding slots 120, since there is a sufficient distance between the connection structures 2145 of different coil units 200a, flaring and deformation processing is not required to be carried out on the first pin 214 and the second pin 215 in the connection structure 2145. In this way, the complexity of the process can be lowered, the stability of the position of the first pin 214 and the second pin 215 can be ensured without flaring and deformation processing, thereby reducing the risk of cracking during the welding. On the other hand, an electrical clearance between the connection structures 2145 can be increased, thereby improving the safety performance of the stator.

In the above technical solution, the axial dimension of the stator can be further shortened. As a result, the motor has a smaller axial dimension and a lighter weight. When the motor is applied to a vehicle, an unsprung mass can be reduced. A plurality of links and air springs are provided, which is more conducive to controllability of a chassis. The connection structures 2145 of the adjacent coil units 200a are offset from each other in the circumferential direction. In this way, the electrical clearance between the connection structures 2145 can be increased, thereby reducing insulation requirements at the connection structures 2145. Moreover, the process complexity can be reduced, raw materials can be saved, and the production line operation rhythm can be improved.

In an exemplary embodiment of the present disclosure, the connection structures 2145 of two adjacent coil units 200a in the axial direction are arranged at intervals in the circumferential direction.

In an exemplary embodiment of the present disclosure, the connection structures 2145 of the coil unit 200a located on two sides of one coil unit 200a in the axial direction are stacked together in the axial direction, which can maximize the spacing between the connection structures 2145 of two adjacent coil units 200a in the circumferential direction.

For example, four coil units 200a are provided. The four coil units 200a include a first coil unit, a second coil unit, a third coil unit, and a fourth coil unit sequentially in a direction away from the bottom wall of the winding slot 120. The connection structure 2145 between the first coil unit and the second coil unit, the connection structure 2145 between the second coil unit and the third coil unit, and the connection structure 2145 between the third coil unit and the fourth coil unit are arranged at intervals in the circumferential direction. Further, the connection structure 2145 between the first coil unit and the third coil unit, and the connection structure 2145 between the second coil unit and the fourth coil unit are stacked together in the axial direction.

In an exemplary embodiment of the present disclosure, the plurality of connection structures 2145 of each of the coil units 200a are evenly distributed in the circumferential direction to increase the spacing of abutting portions of two adjacent coil units 200a.

In some embodiments, as shown in FIG. 3 to FIG. 8, each of the plurality of first conductors 210 further includes a first connection arm 216 and a second connection arm 217. The first insertion portion 211 is connected to the first pin 214 by the first connection arm 216, and the second pin 215 is connected to the second insertion portion 212 by the second connection arm 217. In two adjacent first conductors 210 in the circumferential direction, the second connection arm 217 of one of the two adjacent first conductors 210 passes between the second pin 215 of another one of the two adjacent first conductors 210 and the stator core 100.

In an exemplary embodiment of the present disclosure, the first insertion portion 211 and the second insertion portion 212 of the first conductor 210 are spaced apart from each other in the circumferential direction and connected to each other to form a substantially U-shaped structure. The first insertion portion 211 is one wall part of the U-shaped structure, and the second insertion portion 212 is the other wall part of the U-shaped structure. The first connection arm 216 is formed by extending away from the second insertion portion 212 in the circumferential direction. That is, the first connection arm 216 is formed by extending away from an interior of the U-shaped structure. Similarly, the second connection arm 217 is formed by extending away from the interior of the U-shaped structure.

In an exemplary embodiment of the present disclosure, the first connection arm 216 and the second connection arm 217 are located outside the stator core 100.

In an exemplary embodiment of the present disclosure, the first connection arm 216 and the first insertion portion 211 are integrally formed to improve a connection strength between the first connection arm 216 and the first insertion portion 211. In an exemplary embodiment of the present disclosure, the second connection arm 217 and the second insertion portion 212 are integrally formed to improve a connection strength between the second connection arm 217 and the second insertion portion 212.

In an exemplary embodiment of the present disclosure, the first connection arm 216 and the first pin 214 are integrally formed to improve the connection strength between the first connection arm 216 and the first pin 214. In an exemplary embodiment of the present disclosure, the second connection arm 217 and the second pin 215 are integrally formed to improve the connection strength between the second connection arm 217 and the second pin 215.

In an exemplary embodiment of the present disclosure, the first pin 214 is formed by radially extending an end of the first connection arm 216 facing away from the first insertion portion 211 in a direction away from the center of the stator core 100. In an exemplary embodiment of the present disclosure, the second pin 215 is formed by extending an end of the second connection arm 217 facing away from the second insertion portion 212 in a second direction away from the second insertion portion 212.

In the above technical solution, on the one hand, a position of the first pin 214 can be adjusted by controlling the shape and the dimension of the first connection arm 216, and a position of the second pin 215 can be adjusted by controlling the shape and the dimension of the second connection arm 217. As a result, the first pin 214 and the second pin 215 may be located at suitable positions. The second connection arm 217 of one first conductor 210 passes between the second pin 215 of another first conductor 210 and the stator core 100. That is, the second pin 215 of the other first conductor 210 is located at a side of the second connection arm 217 away from the center of the stator core 100. That is, the second pin 215 is located outside the second connection arms 217 of other first conductors 210. When the first pin 214 and the second pin 215 are connected to each other through the welding, the influence of a high temperature on other components of the first conductor 210 during the welding can be reduced. Meanwhile, it is convenient to perform the welding operation on the first pin 214 and the second pin 215.

Reference may be made to FIG. 3 to FIG. 12, in which FIG. 12 is a partial schematic structural view of a coil unit of a stator according to some embodiments of the present disclosure.

In some embodiments, as shown in FIG. 3 to FIG. 12, a side of the second connection arm 217 facing away from the stator core 100 has an avoidance recess 217a for avoiding the second pin 215 of another first conductor 210.

In an exemplary embodiment of the present disclosure, the second pin 215 is correspondingly located at a side of the avoidance recess 217a facing away from the center of the stator core 100. In an exemplary embodiment of the present disclosure, the second pin 215 is at least partially correspondingly located in the avoidance recess 217a.

The avoidance recess 217a may have various shapes. When the second pin 215 and the second connection arm 217 are connected in a rounded transition, the avoidance recess 217a may be arc-shaped, which on the one hand facilitates machine shaping of the avoidance recess 217a, and on the other hand allows the shape of the avoidance recess 217a and the connection shape of each of the second pin 215 and the second connection arm 217 to be adapted. In this way, the avoidance recess 217a can better avoid the second pin 215.

In the above technical solution, by providing the avoidance recess 217a at the second connection arm 217, it is possible to provide the avoidance for the second pin 215, to avoid the second pin 215 from being stacked to the second connection arms 217 of other first conductors 210. As a result, a thickness of the coil unit 200a in the axial direction can be reduced. By providing the avoidance recess 217a, an end height of the stator winding 200 can be minimized. A dimension of an outer envelope of the stator is relatively small, and the dimension of the motor is smaller, which facilitates the arrangement of the motor. In addition, by providing the avoidance recess 217a, an interaction force caused by a positional interference between the second pin 215 and the second connection arm 217 can also be improved, affecting the stability of the position of the second pin 215, which in turn affect the welding strength.

In an exemplary embodiment of the present disclosure, in two adjacent first conductors 210 in the circumferential direction, the first connection arm 216 of one of the two adjacent first conductors 210 passes between the first pin 214 of the other first conductor 210 and the stator core 100. In an exemplary embodiment of the present disclosure, a side of the first connection arm 216 facing away from the stator core 100 has an avoidance recess for avoiding the first pin 214 of the other first conductor 210.

In some embodiments, as shown in FIG. 12, the second connection arm 217 is bent where the second connection arm 217 corresponds to the avoidance recess 217a, and is formed as a protrusion 217b protruding towards the stator core 100.

In the above embodiment, by providing the protrusion 217b corresponding to the avoidance recesses 217a, the second connection arm 217 can be form with the avoidance recess 217a and the protrusion 217b by bending process, allowing a forming process of the second connection arm 217 to be simple.

In some embodiments, as shown in FIG. 3, the first pin 214 and the second pin 215 are formed by radially extend away from the center of the stator core 100.

In the above embodiment, when the first pin 214 and the second pin 215 are formed by radially extending away from the center of the stator core 100, a gap between the first pin 214 and the second pin 215 and components such as the first insertion portion 211 can be increased. When the overlapped first pin 214 and second pin 215 are welded to each other, the influence of the high temperature on other components can be reduced. When the overlapped first pin 214 and second pin 215 are formed according to the invention by extending towards each other in the circumferential direction, the shape of the first conductor 210 can be simplified, and the dimension of the first conductor 210 can be reduced, thereby reducing the height of the coil unit 200a away from the end of the stator core 100. In addition, the dimension of the outer envelope of the stator can be reduced, and the weight of the first conductor 210 can also be reduced, which facilitates the arrangement of the stator.

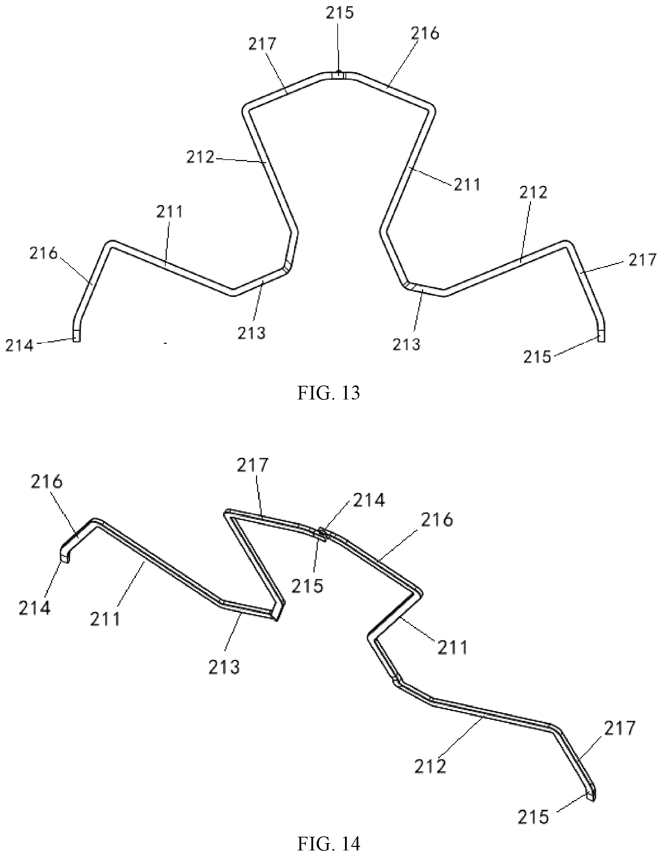

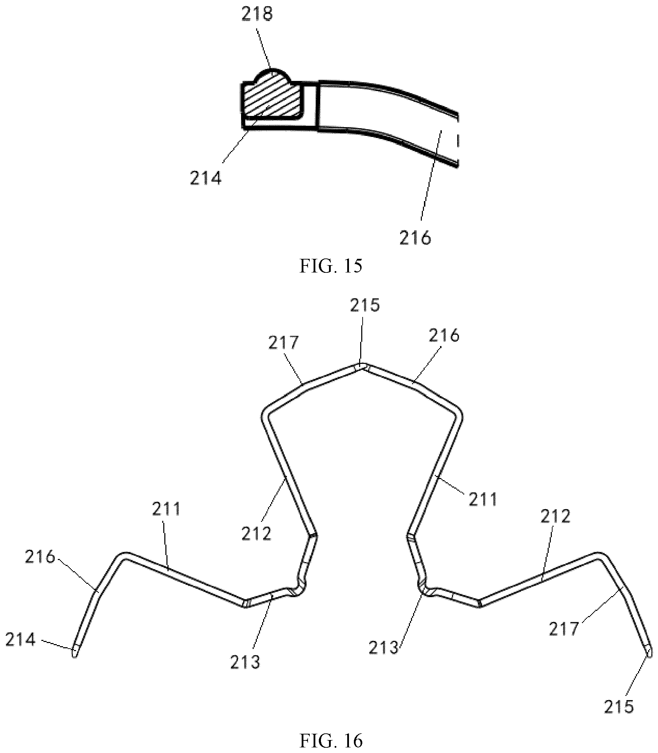

According to the invention, as shown in FIG. 13 to FIG. 18, the overlapped first pin 214 and second pin 215 are formed by extending towards each other in the circumferential direction.

When the overlapped first pin 214 and second pin 215 are formed by extending towards each other in the circumferential direction, the first pin 214 and the second pin 215 may overlap to each other with circumferential overlapping, cross overlapping, and other structural forms. The first pin 214 and the second pin 215 may directly overlap with each other, or in an exemplary embodiment of the present disclosure, as shown in FIG. 13 to FIG. 15, the first pin 214 and the second pin 215 are provided with welding protrusions 218. The welding protrusion 218 is formed by protruding away from the center of the stator core 100. An orthographic projection of the welding protrusion 218 in the axial direction may has a semicircular shape or a polygonal shape. The welding protrusions 218 of the first pin 214 and the second pin 215 are stacked together in the axial direction. During a manufacturing stage of the stator, the welding protrusions 218 of the first pin 214 and the second pin 215 may be clamped at an overlapping position and then connected to each other through the welding. The welding may be laser or argon arc welding. By directly overlapping the first pin 214 and the second pin 215 in the circumferential direction, a radial space of the stator can be saved. As a result, the end height of the coil unit 200a can be suppressed to be lower, and the dimension of the outer envelope of the stator and the weight of the stator can be reduced.

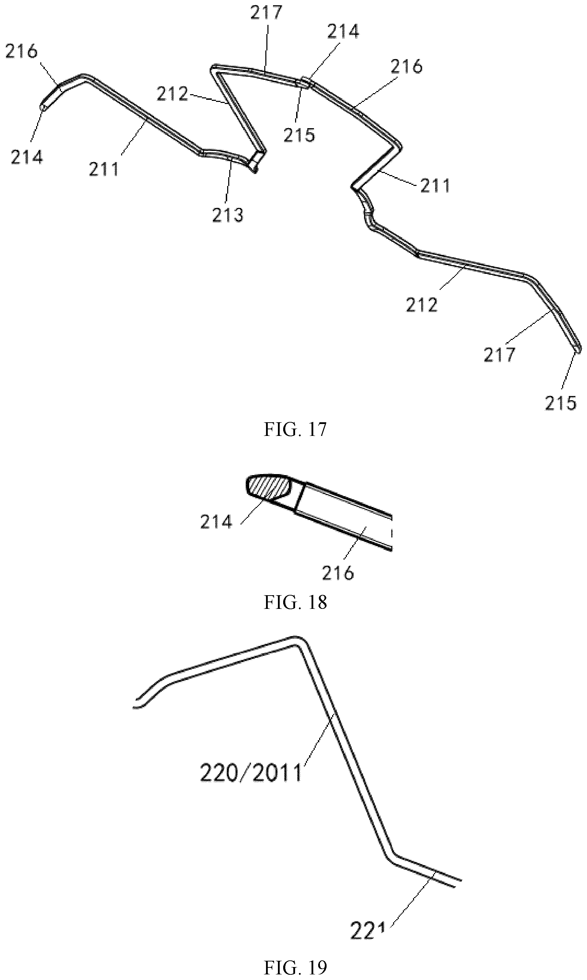

Reference may be made to FIG. 19, which is a schematic structural view of a first conductor 210 of a stator according to some embodiments of the present disclosure.

As shown in FIG. 19, the coil unit further includes a second conductor 220. The second conductor 220 includes one insertion portion 2011 inserted into the winding slot 120, which can simplify a structure of the second conductor 220 and facilitate the manufacturing of the second conductor 220.

In an exemplary embodiment of the present disclosure, the second conductor 220 includes an insertion portion 2011 and a connection section 221. The insertion portion 2011 and the connection section 221 are integrally formed to have an I-shaped structure. The insertion portion 2011 and the connection section 221 are distributed sequentially in an extending direction of the I-shape structure. The two second conductors 220 are connected to each other by the connection section 221 to form a similar shape to the first conductor 210.

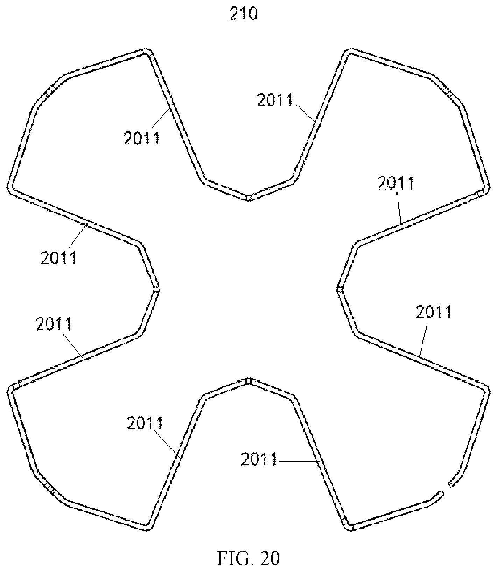

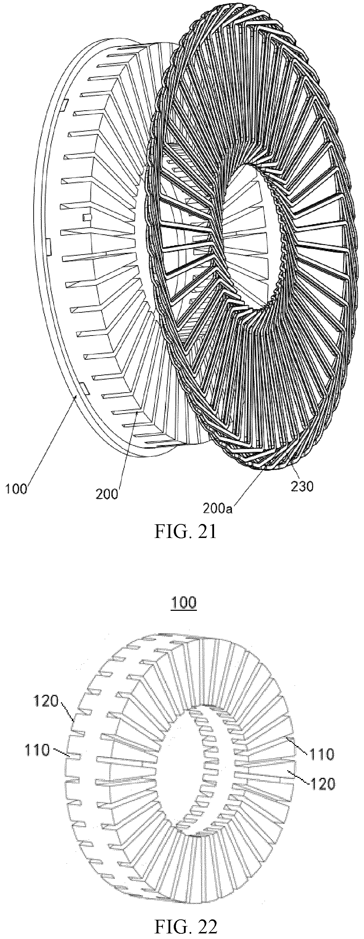

Reference may be made to FIG. 20 and FIG. 21, in which FIG. 20 is a schematic structural view of another first conductor 210 of a stator according to some embodiments of the present disclosure, and FIG. 21 is a schematic structural view of a stator including the first conductor 210 shown in FIG. 20 according to some embodiments of the present disclosure.

In some embodiments, as shown in FIG. 20 and FIG. 21, each of the plurality of first conductors 210 includes one insertion portion 2011, or each of the plurality of first conductors 210 is bent continuously and includes at least three insertion portions 2011. The at least three insertion portions 2011 of each of the plurality of first conductors 210 are inserted into different winding slots 120, respectively.

In the above embodiment, three insertion portions 2011 of one first conductor 210 are inserted into different winding slots 120 respectively. In this way, the contact area between the first conductor 210 and the stator core 100 can increased, thereby improving the stability of the relative position between the first conductor 210 and the stator core 100.

In an exemplary embodiment of the present disclosure, the first conductor 210 may include eight insertion portions 2011.

In the embodiments of the present disclosure, a combination of the first conductor 210 and the second conductor 220 may have different forms, which can reduce the number of types of preformed distributed coil units 200a, lower process complexity, and minimize mold investment costs.

In some embodiments, as shown in FIG. 22 to FIG. 24, two end surfaces 110 of the stator core 100 in the axial direction of the stator core 100 both have the plurality of winding slots 120.

In the above embodiment, by forming the plurality of winding slots 120 at two sides of the stator core 100 in the axial direction thereof, the stator windings 200 can be embedded at different sides of the stator core 100, and one stator core 100 can accommodate more coil units 200a.

In some embodiments, the first insertion portion 211 and the second insertion portion 212 of one first conductor 210 are arranged symmetrically.

In an exemplary embodiment of the present disclosure, when the first conductor 210 includes the first pin 214 and the second pin 215, the first pin 214 and the first insertion portion 211 of one first conductor 210 are arranged symmetrically with the second pin 215 and the second insertion portion 212 of the one first conductor 210.

In an exemplary embodiment of the present disclosure, when the first conductor 210 includes the first pin 214, the first connection arm 216, the second pin 215, and the second connection arm 217, the first pin 214, the first connection arm 216, and the first insertion portion 211 of one first conductor 210 are arranged symmetrically with the second pin 215, the second connection arm 217, and the second insertion portion 212 of the one first conductor 210.

In the above technical solution, by symmetrically arranging the first insertion portion 211 and the second insertion portion 212, a force to which the first conductors 210 is subject can be balanced, thereby allowing for more stable relative positions among the plurality of first conductors 210 that are inserted and embedded.

In some embodiments, two end surfaces 110 of the stator core 100 in the axial direction of the stator core 100 both have the plurality of winding slots 120.

In the above embodiment, by forming the plurality of winding slots 120 at two sides of the stator core 100 in the axial direction thereof, the stator windings 200 can be embedded at different sides of the stator core 100, and one stator core 100 can accommodate more coil units 200a.

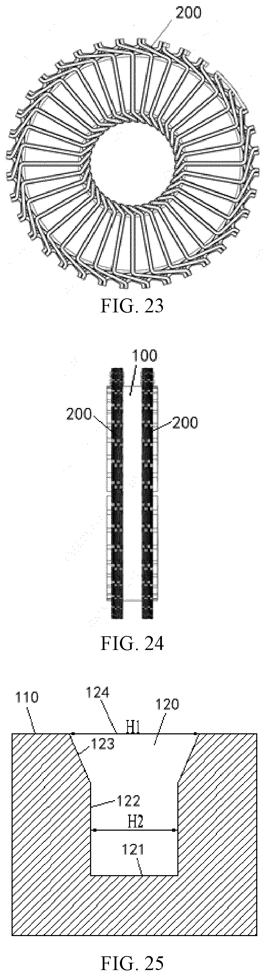

According to the invention, as shown in FIG. 25, each of the plurality of winding slots 120 includes a bottom wall surface 121, two side wall surfaces 122 connected to the bottom wall surface 121, and two inclined surfaces 123 respectively connected to the two side wall surfaces 122. The two side wall surfaces 122 are spaced apart from each other in the circumferential direction. A slot opening 124 is formed between ends of the two inclined surfaces 123 facing away from the respective side wall surfaces 122.

In the above embodiment, by connecting the inclined surface 123 to the side wall surface 122, a dimension of the slot opening 124 can be increased, thereby facilitating embedding the coil unit 200a in the winding slots 120.

In some embodiments, a dimension of the slot opening 124 in the circumferential direction is H1, and a spacing between the two side wall surfaces 122 in the circumferential direction is H2, where H1≥1.5 H2.

In the above technical solution, an extending dimension of the slot opening 124 in the circumferential direction is relative greater, and is greater than 1.5 times the spacing between the two side wall surfaces 122 in the circumferential direction. In this way, the coil unit 200a can be easily inserted into the winding slots 120, and thus the efficiency of embedding the coil unit 200a into the winding slots 120 can be improved. As a result, a space for assembling the predetermined windings 200 and the gaps between the conductors can be greatly reduced, allowing a copper fullness rate to be more than 75%.

In an exemplary embodiment of the present disclosure, when a plurality of coil units 200a is provided, the coil units 200a may be sequentially stacked into the winding slots 120 through the slot openings 124 of the winding slots 120. In another embodiment, the plurality of coil units 200a may be stacked into the winding slots 120 as a whole through the slot openings 124 of the winding slots 120. In the stator according to the embodiments of the present disclosure, the coil unit 200a has a simple structure, the wire embedding method is convenient and simple, and automatic production can be easily realized.

In an exemplary embodiment of the present disclosure, the number of the winding slots 120 in the stator core 100 and the number of the first conductors 210 may be adjusted as desired. The embodiments of the present disclosure will be described below by taking 48 winding slots 120 as an example. The 48 winding slots 120 are evenly distributed at the stator core 100 in the circumferential direction. During the wire embedding of the coil unit 200a, i.e., during the arrangement of the coil unit 200a in the winding slots 120, one first conductor 210 may be stacked in the winding slot 120 each time until the 42th first conductor 210 is stacked in the winding slot 120. The 43rd to 48th first conductors 210 may be inserted through the slot openings 124 of the winding slots 120 as a whole by means of robot clamping until the 43rd to 48th first conductors 210 are attached to the first conductors 210 located in the winding slots 120. After one coil unit 200a has been embedded, the second coil unit 200a and the third coil unit 200a are sequentially embedded.

The stator core 100 may be selected from the winding-formed stator core 100, which can improve the problem of wastage of edges and intermediate cylindrical materials in the conventional process. The waste materials only include materials corresponding to the winding slots 120, i.e., the materials removed to form the winding slots 120. Therefore, the utilization rate of the materials can be improved. Moreover, the stator core 100 has a simple forming process, and thus automation can be easily realized. In an exemplary embodiment of the present disclosure, the stator core 100 is die-cast formed from composite materials such as sheet molding plastic materials with high magnetic permeability and low loss. As a result, the stator core 100 can be easily formed and has a simple heat treatment process. In an exemplary embodiment of the present disclosure, the stator core 100 may also be assembled using split iron cores. In this way, the stator core 100 has a higher dimension and precision, stable quality, and high production efficiency. Meanwhile, the material utilization is high, and material costs can be lowered.

In an exemplary embodiment of the present disclosure, the stator core 100 may be slotted at one side or at two sides. That is, the winding slots 120 are formed at one side or two sides of the stator core 100 in the axial direction. In this way, single-side or double-side wire embedding can be implemented for the coil unit 200a. In the single-side slotted wire embedding method of the stator core 100, the stator core 100 has a yoke part to facilitate mounting and fixing of the stator. The double-sided slotted wire embedding method of the stator core 100 has technical advantages such as improved material utilization rate, motor efficiency, and power density, and reduced weight and volume.

The stator according to the embodiments of the present disclosure is suitable for motors with different numbers of phases, and thus may be adapted to different voltages and power ranges.

In some embodiments, the stator winding 200 includes three phase windings. The three windings include a first phase winding, a second phase winding, and a third phase winding. In an exemplary embodiment of the present disclosure, the first phase winding is a U-phase winding, the second phase winding is a V-phase winding, and the third phase winding is a W-phase winding.

Each of the phase windings may include only one branch or a plurality of branches. The branches of the phase windings may also be referred to as parallel branches.

The number of the branches of the phase winding may be any integer number to expand the use range of the winding design and adapt to different voltages and power ranges.

In some embodiments, the stator windings 200 may be connected into a full-pitch winding, a short-pitch winding, or a multi-layer winding.

In an exemplary embodiment of the present disclosure, when the stator winding 200 is a three-phase stator winding, there are various three-phase distribution forms in each of the winding slots 120, such as a structure of 12 poles and 36 winding slots with the number of the winding slots per pole per phase Q being 1. Taking 12 poles as an example, 36, 72 or more winding slots 120 may be provided. By adjusting the number of the winding slots Q, harmonics of different orders may be eliminated or even reduced by 5, 7, 11, and 13 orders for example, thereby reducing torque ripple and improving NVH.

Embodiments of the present disclosure also provide a motor including a rotor and the stator according to any one of the above embodiments. The rotor is arranged in a space defined by the inner wall of the stator core 100.

The motor according to the embodiments of the present disclosure may be a generator or an electrical motor.

Embodiments of the present disclosure also provide a power assembly including a speed reducer and the above-mentioned motor. The motor is in a transmission connection with the speed reducer. In an exemplary embodiment of the present disclosure, a drive shaft of the motor may be in the transmission connection with an input shaft of the speed reducer by a transmission member such as a coupling to output a driving force to the speed reducer from a flat wire motor.

Embodiments of the present disclosure also provide a vehicle including the above-mentioned power assembly. The above-mentioned power assembly is provided in the vehicle, and is configured to supply operation power to the vehicle. In an exemplary embodiment of the present disclosure, the vehicle may be a new energy vehicle driven by electric energy, for example. The new energy vehicle may for example be a hybrid electric vehicle, a pure electric vehicle, or a fuel cell electric vehicle, etc., or a vehicle that employs a high-efficiency energy storage device such as a supercapacitor, a flywheel battery, or a flywheel storage device, as a source of the electric energy.

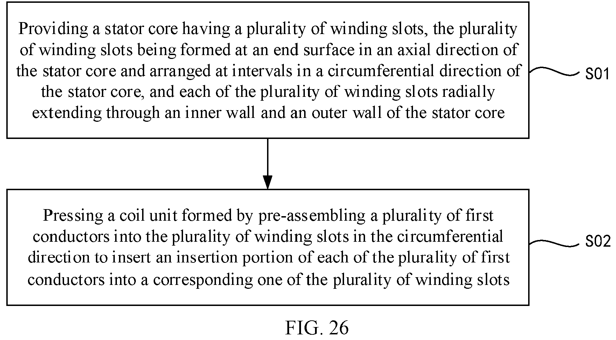

Referring to FIG. 26, the invention further provides as defined in claim 12 a manufacturing method of a stator. The manufacturing method includes operations at blocks S01 and S02. At block S01, a stator core having a plurality of winding slots is provided. The plurality of winding slots is formed at an end surface of the stator core in an axial direction of the stator core, and is arranged at intervals in a circumferential direction of the stator core. Each of the plurality of winding slots extends in a radial direction of the stator core. At block S02, a coil unit formed by pre-assembling a plurality of first conductors is pressed into the plurality of winding slots in the circumferential direction to insert an insertion portion of each of the plurality of conductors into a corresponding one of the plurality of winding slots.

In the present embodiment, the stator core having a plurality of winding slots is first provided, and then after assembling the plurality of first conductors into the coil unit, the pre-assembled coil unit is embedded into the winding slots as a whole. In this way, the assembly efficiency of the stator can be effectively improved as compared with inserting the plurality of first conductors into the winding slots one by one.

In some embodiments, before the operation at block S02, the manufacturing method further includes: providing a conductor of a linear shape, the conductor including a wire and an insulation coating wrapping around the wire; removing the insulation coating at two ends of the conductor; and bending the conductor to form the first conductor including two insertion portions spaced apart from each other.

In the above technical solution, the first conductor is formed by directly bending the conductor of the linear shape after removing the insulation coating at two ends of the conductor without performing conductor cutting and other processes in the later stage, which can lower complexity of the manufacturing process of the conductor and improve the manufacturing efficiency of the stator.

In some embodiments, the stator has a pole number of 2p and a pole pitch that is n winding slots.

The manufacturing method further includes, prior to the operation at block S02: providing 2p·n first conductors. Each of the 2p·n first conductors includes a first insertion portion and a second insertion portion, and a span between the first insertion portion and the second insertion portion is n winding slots.

Pre-assembling the plurality of first conductors into the coil unit includes: providing an assembly mechanism including 2p·n grooves, the 2p·n grooves being evenly arranged in a circumferential direction of an assembly mechanism; stacking (2p-1)·n first conductors at the 2p·n grooves sequentially in a counterclockwise direction; and inserting remaining n first conductors into the grooves of the assembly mechanism to form the coil unit. In one of the grooves, the first insertion portion of one first conductor of the coil unit is located at a side of the second insertion portion of another first conductor of the coil unit close to a bottom wall of the groove.

In some embodiments, the manufacturing method further includes: removing the pre-assembled coil unit from the apparatus mechanism. The operation at block S02 may be performed after the coil unit is removed from the apparatus mechanism. In the above technical solution, the span between the first insertion portion and the second insertion portion is equal to the pole pitch, which can simplify the winding structure of the first conductor. In one of the plurality of winding slots, the first insertion portion of the first conductor is closer to the bottom wall of the winding slot, allowing the plurality of first conductors to be sequentially woven, stacked, and embedded to form a coil unit with two winding layers. The first insertion portion of the first conductor is located at one of the two winding layers, and the second insertion portion is located at another winding layer. The plurality of first conductors can be embedded with each other and limited by each other, thereby improving the stability of relative positions among the plurality of first conductors of the coil unit.

According to some embodiments of the present disclosure, referring to FIG. 1 to FIG. 14, and FIG. 25, the stator includes a stator core 100 and a stator winding 200. The stator core 100 has a plurality of winding slots 120. The plurality of winding slots 120 is formed at an end surface 110 of the stator core 100 in an axial direction of the stator core 100, and is arranged at intervals in a circumferential direction of the stator core 100. Each of the plurality of winding slots 120 extends in a radial direction of the stator core 100. The stator winding 200 includes at least one coil unit 200a. Each of the at least one coil unit 200a includes a plurality of first conductors 210 assembled together. Each of the plurality of first conductors 210 includes a first insertion portion 211 and a second insertion portion 212. The first insertion portion 211 and the second insertion portion 212 are arranged in the circumferential direction and inserted into different corresponding winding slots 120. In one of the plurality of winding slots 120, the first insertion portion 211 of one first conductor 210 of the coil unit 200a is located at a side of the second insertion portion 212 of another first conductor 210 of the coil unit 200a close to a bottom wall of the winding slot 120. Each of the plurality of first conductors 210 further includes a connection portion 213 connecting the first insertion portion 211 and the second insertion portion 212. The connection portion 213 is located at a side of the first insertion portion 211 and the second insertion portion 212 facing towards a center of the stator core 100. The connection portion 213 includes a first connection section 213a, a second connection section 213b, and a bent section 213c connecting the first connection section 213a and the second connection section 213b. The first connection section 213a extends from an end of the first insertion portion 211 close to the center of the stator core 100. The first connection section 213a is inclined and bent towards the second insertion portion 212. The second connection section 213b extends from an end of the second insertion portion 212 close to the center of the stator core 100. The second connection section 213b is inclined and bent towards the first insertion portion 211. The first conductor 210 has an integral structure. Each of the plurality of first conductors 210 further includes a first pin 214 and a second pin 215. The first pin 214 is connected to an end of the first insertion portion 211 facing away from the connection portion 213. The second pin 215 is connected to an end of the second insertion portion 212 facing away from the connection portion 213. The coil unit 200a includes a plurality of conductive branches 201. Each of the conductive branches 201 includes several first conductors 210 connected in series. In two adjacent first conductors 210 of the conductive branch 201, the first pin 214 of one of the two adjacent first conductors 210 is connected to the second pin 215 of another one of the two adjacent first conductors 210. In two adjacent first conductors 210 of the conductive branch 201, the first pin 214 of one of the two adjacent first conductors 210 overlaps and is connected with the second pin 215 of another one of the two adjacent first conductors 210 in the axial direction. An overlapping part between the first pin 214 and the second pin 215 in the axial direction is formed as a connection structure 2145. The coil unit 200a includes a plurality of connection structures 2145 arranged at intervals in the circumferential direction. The stator winding 200 includes a plurality of coil units 200a stacked together in the axial direction. The connection structures 2145 of two adjacent coil units 200a of the plurality of coil units 200a are offset from each other in the circumferential direction. Each of the plurality of first conductors 210 further includes a first connection arm 216 and a second connection arm 217. The first insertion portion 211 is connected to the first pin 214 by the first connection arm 216, and the second pin 215 is connected to the second insertion portion 212 by the second connection arm 217. In two adjacent first conductors 210 in the circumferential direction, the second connection arm 217 of one of the two adjacent first conductors 210 passes between the second pin 215 of another one of the two adjacent first conductors 210 and the stator core 100. A side of the second connection arm 217 facing away from the stator core 100 has an avoidance recess 217a for avoiding the second pin 215 of another first conductor 210. Two end surfaces 110 of the stator core 100 in the axial direction of the stator core 100 both have the plurality of winding slots 120. Each of the plurality of winding slots 120 includes a bottom wall surface 121, two side wall surfaces 122 connected to the bottom wall surface 121, and two inclined surfaces 123 respectively connected to the two side wall surfaces 122. The two side wall surfaces 122 are spaced apart from each other in the circumferential direction. A slot opening 124 is formed between ends of the two inclined surfaces 123 facing away from the respective side wall surfaces 122.

It should be noted that the embodiments and the features in the embodiments in the present disclosure may be combined with each other without conflict.

Finally, it should be noted that the above embodiments are only used to illustrate the technical solutions of the present disclosure, rather than limiting the technical solutions. Although the present disclosure has been described in detail with reference to the above embodiments, those of ordinary skill in the art should understand that modifications may be made to the technical solutions described in the above embodiments, or equivalent substitutions may be made to some of the technical features. However, these modifications or substitutions do not cause the essence of the corresponding technical solutions to depart from the scope of the technical solutions in the embodiments of the present disclosure. The scope of protection is defined by the appended claims.

## Claims

1. A stator of a motor, the stator comprising:
a stator core (100) having a plurality of winding slots (121) formed at an end surface (110) of the stator core (100) in an axial direction of the stator core (100) and arranged at intervals in a circumferential direction of the stator core (100), each of the plurality of winding slots (121) radially passing through an inner wall and an outer wall of the stator core (100); and
a stator winding (200) comprising at least one coil unit (200a), each of the at least coil unit (200a) comprising a plurality of first conductors (210) assembled together, each of the plurality of first conductors (210) comprising at least one insertion portion (2011) inserted into a corresponding one of the plurality of winding slots (121),
wherein the plurality of first conductors (210) of the coil unit (200a) are arranged in a staggered manner in the circumferential direction of the stator core (100); and
each of the plurality of first conductors (210) comprises a first insertion portion (211) and a second insertion portion (212) connected to each other, the first insertion portion (211) and the second insertion portion (212) being respectively inserted into different winding slots (121) of the plurality of winding slots (121), wherein in one winding slot (121) of the plurality of winding slots (121), the first insertion portion (211) of one first conductor (210) and the second insertion portion (212) of another first conductor (210) are stacked together,
wherein each of the plurality of winding slots (120) comprises a bottom wall surface (121), two side wall surfaces (122) connected to the bottom wall surface (121), and two inclined surfaces (123) respectively connected to the two side wall surfaces (122);
the two side wall surfaces (122) are spaced apart from each other in the circumferential direction of the stator core (100); and
a slot opening (124) is formed between ends of the two inclined surfaces (123) facing away from the respective side wall surfaces (122),
wherein the first insertion portion (211) and the second insertion portion (212) of one first conductor (210) are arranged in the circumferential direction of the stator core (100); and
each of the plurality of first conductors (210) further comprises a connection portion (213) connecting the first insertion portion (211) and the second insertion portion (212);
each of the plurality of first conductors (210) further comprises a first pin (214) connected to an end of the first insertion portion (211) facing away from the connection portion (213) and a second pin (215) connected to an end of the second insertion portion (212) facing away from the connection portion (213);
the coil unit (200a) comprises a plurality of conductive branches (201), each of the conductive branches (201) comprising the plurality of first conductors (210) connected in series, wherein in two adjacent first conductors (210) of the conductive branch (201), the first pin (214) of one of the two adjacent first conductors (210) is connected to the second pin (215) of another one of the two adjacent first conductors (210),
wherein the first pin (214) and the second pin (215) overlapping with each other are formed by extending towards each other in the circumferential direction of the stator core (100).

2. The stator according to claim 1, wherein the first insertion portion (211) and the second insertion portion (212) of one first conductor (210) are arranged in the circumferential direction of the stator core (100); and
in one of the plurality of winding slots (121), the first insertion portion (211) of one first conductor (210) of the coil unit (200a) is located at a side of the second insertion portion (212) of another first conductor (210) of the coil unit (200a) close to a bottom wall of the winding slot (121);
and/or
wherein a span between the first insertion portion (211) and the second insertion portion (212) of one first conductor (210) is equal to a pole pitch.

3. The stator according to claim 1 or claim 2, wherein the at least one coil unit (200a) comprises a plurality of coil units (200a) stacked together in the axial direction of the stator core (100).

4. The stator according to claim 1,
wherein the connection portion (213) is located at a side of the first insertion portion (211) and the second insertion portion (212) facing towards a center of the stator core (100).

5. The stator according to claim 4, wherein the connection portion (213) comprises:
a first connection section (213a) extending from an end of the first insertion portion (211) close to the center of the stator core (100), the first connection section (213a) being inclined and bent towards the second insertion portion (212); and
a second connection section (213b) extending from an end of the second insertion portion (212) close to the center of the stator core (100), the second connection section (213b) being inclined and bent towards the first insertion portion (211),
wherein the first connection section (213a) is connected to the second connection section (213b)
preferably,
wherein the connection portion (213) further comprises a bent section (213c) connecting the first connection section (213a) and the second connection section (213b),
or
wherein the first conductor (210) has an integral structure.

6. The stator according to claim 1, wherein in two adjacent first conductors (210) of the conductive branch (201), the first pin (214) of one of the two adjacent first conductors (210) overlaps and is connected with the second pin (215) of another one of the two adjacent first conductors (210) in the axial direction of the stator core (100);
preferably,
wherein the first pin (214) and the second pin (215) are welded to each other in an overlapping region.

7. The stator according to claim 6, wherein an overlapping and connection part between the first pin (214) and the second pin (215) is formed as a connection structure (2145); and
the coil unit (200a) comprises a plurality of connection structures (2145) arranged at intervals in the circumferential direction of the stator core (100);
preferably,
wherein the stator winding (200) comprises a plurality of coil units (200a) stacked together in the axial direction of the stator core (100); and
the connection structures (2145) of two adjacent coil units (200a) of the plurality of coil units (200a) are offset from each other in the circumferential direction of the stator core (100).

8. The stator according to any one of claims 1, 6 or 7, wherein each of the plurality of first conductors (210) further comprises a first connection arm (216) and a second connection arm (217), wherein the first insertion portion (211) is connected to the first pin (214) by the first connection arm (216), and wherein the second pin (215) is connected to the second insertion portion (212) by the second connection arm (217); and
in two adjacent first conductors (210) in the circumferential direction of the stator core (100), the second connection arm (217) of one of the two adjacent first conductors (210) passes between the second pin (215) of another first conductor (210) and the stator core (100);
preferably,
wherein a side of the second connection arm (217) facing away from the stator core (100) has an avoidance recess (217a) for avoiding the second pin (215) of the other first conductor (210);
more preferably,
wherein the second connection arm (217) is bent where the second connection arm (217) corresponds to the avoidance recess (217a), and is formed as a protrusion (217b) protruding towards the stator core (100).

9. The stator according to claims 1 to 10, wherein the coil unit (200a) further comprises a second conductor (220) comprising one insertion portion (2011) inserted into the winding slot (121).

10. The stator according to claim 1, wherein each of the plurality of first conductors (210) comprises one insertion portion (2011); or
each of the plurality of first conductors (210) is bent continuously and comprises at least three insertion portions (2011), the at least three insertion portions (2011) of each of the plurality of first conductors (210) being inserted into different winding slots (121), respectively;
or
wherein two end surfaces (110) of the stator core (100) in the axial direction of the stator core (100) are both provided with the plurality of winding slots (121);
or
preferably,
wherein a dimension of the slot opening (124) in the circumferential direction of the stator core (100) is H1, and a spacing between the two side wall surfaces (122) in the circumferential direction of the stator core (100) is H2, where H1≥1.5 H2.

11. A motor, comprising the stator according to any one of claims 1 to 10.

12. A manufacturing method of a stator according to claim 1, comprising:
providing (S01) a stator core (100) having a plurality of winding slots (121) formed at an end surface (110) of the stator core (100) in an axial direction of the stator core (100) and arranged at intervals in a circumferential direction of the stator core (100), each of the plurality of winding slots (121) radially passing through an inner wall and an outer wall of the stator core (100); and
pressing (S02) a coil unit (200a) formed by pre-assembling a plurality of first conductors (210) into the plurality of winding slots (121) in the circumferential direction of the stator core (100) to insert an insertion portion (2011) of each of the plurality of first conductors (210) into the plurality of winding slots (121).

13. The method according to claim 12, further comprising, prior to pressing the coil unit (200a) forming by pre-assembling the plurality of first conductors (210) into the plurality of winding slots (121) in the circumferential direction of the stator core (100) to insert the insertion portion (2011) of each of the plurality of first conductors (210) into a corresponding one of the plurality of winding slots (121):
providing a conductor of a linear shape, the conductor comprising a wire and an insulation coating wrapping around the wire;
removing the insulation coating at two ends of the conductor; and
bending the conductor to form the first conductor (210), wherein the first conductor (210) comprises two insertion portions (2011) spaced apart from each other,
and/or
wherein the stator has a pole number of 2p and a pole pitch that is n winding slots (121); and
the method further comprises, prior to pressing (S02) the coil unit (200a) formed by pre-assembling the plurality of first conductors (210) into the plurality of winding slots (121) in the circumferential direction of the stator core (100) to insert the insertion portion (2011) of each of the plurality of first conductors (210) into the corresponding one of the plurality of winding slots (121):
providing 2p·n first conductors (210), each of the 2p·n first conductors (210) comprising a first insertion portion (211) and a second insertion portion (212), and a span between the first insertion portion (211) and the second insertion portion (212) being n winding slots (121);
said pre-assembling the plurality of first conductors (210) into the coil unit (200a) comprises:
providing an assembly mechanism comprising 2p·n grooves, the 2p·n grooves being evenly arranged in a circumferential direction of an assembly mechanism;
stacking (2p-1)·n first conductors (210) at the 2p·n grooves sequentially in a counterclockwise direction; and
inserting remaining n first conductors (210) into the grooves of the assembly mechanism to form a coil unit (200a), wherein in one of the grooves, the first insertion portion (211) of one first conductor (210) of the coil unit (200a) is located at a side of the second insertion portion (212) of another first conductor (210) of the coil unit (200a) close to a bottom wall of the groove.

## Patentansprüche

1. Ständer eines Motors, wobei der Ständer Folgendes umfasst:
ein Ständerblechpaket (100), das mehrere Wicklungsschlitze (121) aufweist, die an einer Endfläche (110) des Ständerblechpakets (100) in eine Axialrichtung des Ständerblechpakets (100) ausgebildet und in Abständen in Umfangsrichtung des Ständerblechpakets (100) angeordnet sind, wobei jeder der mehreren Wicklungsschlitze (121) radial durch eine Innenwand und eine Außenwand des Ständerblechpakets (100) verläuft; und
eine Ständerwicklung (200), umfassend mindestens eine Spuleneinheit (200a), wobei jede der mindestens einen Spuleneinheit (200a) mehrere zusammengebaute erste Leiter (210) umfasst, wobei jeder der mehreren ersten Leiter (210) mindestens einen Einsetzabschnitt (2011) umfasst, der in einen zugehörigen der mehreren Wicklungsschlitze (121) eingesetzt ist,
wobei die mehreren ersten Leiter (210) der Spuleneinheit (200a) in Umfangrichtung des Ständerblechpakets (100) gestaffelt angeordnet sind und
wobei jeder der mehreren ersten Leiter (210) einen miteinander verbundenen ersten Einsetzabschnitt (211) und zweiten Einsetzabschnitt (212) umfasst, wobei der erste Einsetzabschnitt (211) und der zweite Einsetzabschnitt (212) jeweils in verschiedene Wicklungsschlitze (121) der mehreren Wicklungsschlitze (121) eingesetzt sind, wobei in einem Wicklungsschlitz (121) der mehreren Wicklungsschlitze (121) der erste Einsetzabschnitt (211) des ersten Leiters (210) und der zweite Einsetzabschnitt (212) eines anderen ersten Leiters (210) aufeinander gestapelt sind,
wobei jeder der mehreren Wicklungsschlitze (120) eine Bodenwandfläche (121), zwei mit der Bodenwandfläche (121) verbundene Seitenwandflächen (122) und zwei jeweils mit den zwei Seitenwandflächen (122) verbundene Schrägflächen (123) umfasst;
wobei die zwei Seitenwandflächen (122) in Umfangsrichtung des Ständerblechpakets (100) voneinander beabstandet sind und
wobei eine Schlitzöffnung (124) zwischen den von den jeweiligen Seitenwandflächen (122) abgewandten Enden der zwei Schrägflächen (123) ausgebildet ist,
wobei der erste Einsetzabschnitt (211) und der zweite Einsetzabschnitt (212) des ersten Leiters (210) in Umfangsrichtung des Ständerblechpakets (100) angeordnet sind und
jeder der mehreren ersten Leiter (210) ferner einen Verbindungsabschnitt (213) umfasst, der den ersten Einsetzabschnitt (211) mit dem zweiten Einsetzabschnitt (212) verbindet;
wobei jeder der mehreren ersten Leiter (210) ferner einen ersten Stift (214), der mit einem vom Verbindungsabschnitt (213) abgewandten Ende des ersten Einsetzabschnitts (211) verbunden ist, und einen zweiten Stift (215), der mit einem vom Verbindungsabschnitt (213) abgewandten Ende des zweiten Einsetzabschnitts (212) verbunden ist, umfasst;
wobei die Spuleneinheit (200a) mehrere Leiterverzweigungen (201) umfasst, wobei jede der mehreren Leiterverzweigungen (201) die mehreren ersten Leiter (210) umfasst, die in Reihe geschaltet sind, wobei in zwei angrenzenden ersten Leitern (210) der Leiterverzweigungen (201) der erste Stift (214) eines der zwei angrenzenden ersten Leiter (210) mit dem zweiten Stift (215) eines anderen der zwei angrenzenden ersten Leiter (210) verbunden ist,
wobei der erste Stift (214) und der zweite Stift (215) einander überlagern und ausgebildet sind, indem sie sich in Umfangsrichtung des Ständerblechpakets (100) aufeinander zu erstrecken.

2. Ständer nach Anspruch 1, wobei der erste Einsetzabschnitt (211) und der zweite Einsetzabschnitt (212) des ersten Leiters (210) in Umfangsrichtung des Ständerblechpakets (100) angeordnet sind und
wobei in einem der mehreren Wicklungsschlitze (121) der erste Einsetzabschnitt (211) eines ersten Leiters (210) der Spuleneinheit (200a) an einer Seite des zweiten Einsetzabschnitts (212) eines anderen ersten Leiters (210) der Spuleneinheit (200a) in der Nähe einer Bodenwand des Wicklungsschlitzes (121) angeordnet ist
und/oder
wobei die Spanne zwischen dem ersten Einsetzabschnitt (211) und dem zweiten Einsetzabschnitt (212) eines ersten Leiters (210) einer Polteilung entspricht.

3. Ständer nach Anspruch 1 oder Anspruch 2, wobei die mindestens eine Spuleneinheit (200a) mehrere in Axialrichtung des Ständerblechpakets (100) aufeinander gestapelte Spuleneinheiten (200a) umfasst.

4. Ständer nach Anspruch 1,
wobei sich der Verbindungsabschnitt (213) auf einer der Mitte des Ständerblechpakets (100) zugewandten Seite des ersten Einsetzabschnitts (211) und des zweiten Einsetzabschnitts (212) befindet.

5. Ständer nach Anspruch 4, wobei der Verbindungsabschnitt (213) Folgendes umfasst:
ein erstes Verbindungsteilstück (213a), das sich von einem Ende des ersten Einsetzabschnitts (211) in der Nähe der Mitte des Ständerblechpakets (100) erstreckt, wobei das erste Verbindungsteilstück (213a) zum zweiten Einsetzabschnitt (212) hin geneigt und gekrümmt ist; und
ein zweites Verbindungsteilstück (213b), das sich von einem Ende des zweiten Einsetzabschnitts (212) in der Nähe der Mitte des Ständerblechpakets (100) erstreckt, wobei das zweite Verbindungsteilstück (213b) zum zweiten Einsetzabschnitt (211) hin geneigt und gekrümmt ist,
wobei das erste Verbindungsteilstück (213a) mit dem zweiten Verbindungsteilstück (213b) verbunden ist,
vorzugsweise
wobei der Verbindungsabschnitt (213) ferner ein gekrümmtes Teilstück (213c) umfasst, das das erste Verbindungsteilstück (213a) mit dem zweiten Verbindungsteilstück (213b) verbindet,
oder
wobei der erste Leiter (210) eine integrale Struktur aufweist.

6. Ständer nach Anspruch 1, wobei in zwei angrenzenden ersten Leitern (210) der Leiterverzweigung (201) der erste Stift (214) eines der zwei angrenzenden ersten Leiter (210) den zweiten Stift (215) eines anderen der zwei angrenzenden ersten Leiter (210) in Axialrichtung des Ständerblechpakets (100) überlagert und damit verbunden ist;
vorzugsweise
wobei der erste Stift (214) und der zweite Stift (215) in einem Überlagerungsbereich miteinander verschweißt sind.

7. Ständer nach Anspruch 6, wobei ein Überlagerungs- und Verbindungsteil zwischen dem ersten Stift (214) und dem zweiten Stift (215) als Verbindungsstruktur (2145) ausgebildet ist und wobei die Spuleneinheit (200a) mehrere Verbindungsstrukturen (2145) umfasst, die in Umfangsrichtung des Ständerblechpakets (100) in Abständen angeordnet sind;
vorzugsweise
wobei die Ständerwicklung (200) mehrere in Axialrichtung des Ständerblechpakets (100) aufeinander gestapelte Spuleneinheiten (200a) umfasst und
wobei die Verbindungsstrukturen (2145) von zwei angrenzenden Spuleneinheiten (200a) der mehreren Spuleneinheiten (200a) in Umfangsrichtung des Ständerblechpakets (100) voneinander versetzt sind.

8. Ständer nach einem der Ansprüche 1, 6 oder 7, wobei jeder der mehreren ersten Leiter (210) ferner einen ersten Verbindungsarm (216) und einen zweiten Verbindungsarm (217) umfasst, wobei der erste Einsetzabschnitt (211) über den ersten Verbindungsarm (216) mit dem ersten Stift (214) verbunden ist und wobei der zweite Stift (215) über den zweiten Verbindungsarm (217) mit dem zweiten Einsetzabschnitt (212) verbunden ist und
wobei in zwei angrenzenden ersten Leitern (210) in Umfangsrichtung des Ständerblechpakets (100) der zweite Verbindungsarm (217) eines der zwei angrenzenden ersten Leiter (210) zwischen dem zweiten Stift (215) eines anderen ersten Leiters (210) und dem Ständerblechpaket (100) verläuft;
vorzugsweise
wobei eine vom Ständerblechpaket (100) abgewandte Seite des zweiten Verbindungsarms (217) eine Ausweichaussparung (217a) aufweist, um dem zweiten Stift (215) des anderen ersten Leiters (210) auszuweichen;
noch bevorzugter
wobei der zweite Verbindungsarm (217) an der Stelle, an der der zweite Verbindungsarm (217) der Ausweichaussparung (217a) entspricht, gekrümmt ist und als Vorsprung (217b) ausgebildet ist, der zum Ständerblechpaket (100) vorsteht.

9. Ständer nach Anspruch 1 bis 10, wobei die Spuleneinheit (200a) ferner einen zweiten Leiter (220) umfasst, der einen in den Wicklungsschlitz (121) eingesetzten Einsetzabschnitt (2011) umfasst.

10. Ständer nach Anspruch 1, wobei jeder der mehreren ersten Leiter (210) einen Einsetzabschnitt (2011) umfasst oder
jeder der mehreren ersten Leiter (210) durchgehend gekrümmt ist und mindestens drei Einsetzabschnitte (2011) umfasst, wobei die mindestens drei Einsetzabschnitte (2011) jedes der mehreren ersten Leiter (210) in jeweils verschiedene Wicklungsschlitze (121) eingesetzt werden oder
wobei die zwei Endflächen (110) des Ständerblechpakets (100) in Axialrichtung des Ständerblechpakets (100) beide mit den mehreren Wicklungsschlitzen (121) versehen sind
oder
vorzugsweise
wobei eine Abmessung der Schlitzöffnung (124) in Umfangsrichtung des Ständerblechpakets (100) H1 ist und der Abstand zwischen den zwei Seitenwandflächen (122) in Umfangsrichtung des Ständerblechpakets (100) H2 ist, wobei H1≥1,5 H2 ist.

11. Motor, umfassend den Ständer nach einem der Ansprüche 1 bis 10.

12. Herstellungsverfahren eines Ständers nach Anspruch 1, Folgendes umfassend:
Vorsehen (S01) eines Ständerblechpakets (100), das mehrere Wicklungsschlitze (121) aufweist, die an einer Endfläche (110) des Ständerblechpakets (100) in eine Axialrichtung des Ständerblechpakets (100) ausgebildet und in Abständen in Umfangsrichtung des Ständerblechpakets (100) angeordnet sind, wobei jeder der mehreren Wicklungsschlitze (121) radial durch eine Innenwand und eine Außenwand des Ständerblechpakets (100) verläuft; und
Pressen (S02) einer Spuleneinheit (200a), die durch die Vormontage mehrerer erster Leiter (210) ausgebildet ist, in die mehreren Wicklungsschlitze (121) in Umfangsrichtung des Ständerblechpakets (100), um einen Einsetzabschnitt (2011) jedes der mehreren ersten Leiter (210) in die mehreren Wicklungsschlitze (121) einzusetzen.

13. Verfahren nach Anspruch 12, ferner umfassend vor dem Pressen der Spuleneinheit (200a), die durch die Vormontage der mehreren ersten Leiter (210) ausgebildet ist, in die mehreren Wicklungsschlitze (121) in Umfangsrichtung des Ständerblechpakets (100), um den Einsetzabschnitt (2011) jedes der mehreren ersten Leiter (210) in einen zugehörigen der mehreren Wicklungsschlitze (121) einzusetzen:
Vorsehen eines Leiters mit linearer Form, wobei der Leiter einen Draht und eine um den Draht gewickelte Isolierbeschichtung umfasst;
Entfernen der Isolierbeschichtung an zwei Enden des Leiters und
Krümmen des Leiters, um den ersten Leiter (210) auszubilden, wobei der erste Leiter (210) zwei voneinander beabstandete Einsetzabschnitte (2011) umfasst,
und/oder
wobei der Ständer eine Polnummer 2p und eine Polteilung, die n Wicklungsschlitze (121) ist, aufweist und wobei das Verfahren ferner vor dem Pressen (S02) der Spuleneinheit (200a), die durch Vormontage der mehreren ersten Leiter (210) ausgebildet ist, in die mehreren Wicklungsschlitze (121) in Umfangsrichtung des Ständerblechpakets (100), um den Einsetzabschnitt (2011) jedes der mehreren ersten Leiter (210) in einen zugehörigen der mehreren Wicklungsschlitze (121) einzusetzen, Folgendes umfasst:
Vorsehen von 2p·n ersten Leitern (210), wobei jeder der 2p·n ersten Leiter (210) einen ersten Einsetzabschnitt (211) und einen zweiten Einsetzabschnitt (212) umfasst und die Spanne zwischen dem ersten Einsetzabschnitt (211) und dem zweiten Einsetzabschnitt (212) n Wicklungsschlitze (121) beträgt;
wobei die Vormontage der mehreren ersten Leiter (210) in die Spuleneinheit (200a) Folgendes umfasst: Vorsehen eines Montagemechanismus, der 2p·n Nuten umfasst, wobei die 2p·n Nuten in Umfangsrichtung des Montagemechanismus gleichmäßig angeordnet sind;
Stapeln von (2p-1)·n ersten Leitern (210) an den 2p·n Nuten nacheinander entgegen dem Uhrzeigersinn und
Einsetzen der verbleibenden n ersten Leiter (210) in die Nuten des Montagemechanismus, um eine Spuleneinheit (200a) auszubilden, wobei in einer der Nuten der erste Einsetzabschnitt (211) eines ersten Leiters (210) der Spuleneinheit (200a) an einer Seite des zweiten Einsetzabschnitts (212) eines anderen ersten Leiters (210) der Spuleneinheit (200a) in der Nähe einer Bodenwand der Nut angeordnet ist.

## Revendications

1. Stator d'un moteur, le stator comprenant :
un noyau de stator (100) comportant une pluralité d'encoches de bobinage (121) formées au niveau d'une surface d'extrémité (110) du noyau de stator (100) dans une direction axiale du noyau de stator (100) et agencées avec des intervalles dans une direction circonférentielle du noyau de stator (100), chacune de la pluralité d'encoches de bobinage (121) traversant radialement une paroi intérieure et une paroi extérieure du noyau de stator (100) ; et
un bobinage de stator (200) comprenant au moins une unité de bobine (200a), chacune de l'au moins une unité de bobine (200a) comprenant une pluralité de premiers conducteurs (210) assemblés les uns avec les autres, chacun de la pluralité de premiers conducteurs (210) comprenant au moins une partie d'insertion (2011) insérée dans une encoche correspondante de la pluralité d'encoches de bobinage (121),
dans lequel la pluralité de premiers conducteurs (210) de l'unité de bobine (200a) sont disposés de manière décalée dans la direction circonférentielle du noyau de stator (100) ; et
chacun de la pluralité de premiers conducteurs (210) comprend une première partie d'insertion (211) et une seconde partie d'insertion (212) raccordées l'une à l'autre, la première partie d'insertion (211) et la seconde partie d'insertion (212) étant respectivement insérées dans différentes encoches de bobinage (121) de la pluralité d'encoches de bobinage (121), où dans une encoche de bobinage (121) de la pluralité d'encoches de bobinage (121), la première partie d'insertion (211) d'un premier conducteur (210) et la seconde partie d'insertion (212) d'un autre premier conducteur (210) sont empilées,
dans lequel chacune de la pluralité d'encoches de bobinage (120) comprend une surface de paroi inférieure (121), deux surfaces de parois latérales (122) raccordées à la surface de paroi inférieure (121), et deux surfaces inclinées (123) respectivement raccordées aux deux surfaces de parois latérales (122) ;
les deux surfaces de parois latérales (122) sont espacées l'une de l'autre dans la direction circonférentielle du noyau de stator (100) ; et
une ouverture d'encoche (124) est formée entre des extrémités des deux surfaces inclinées (123) orientées à l'opposé des surfaces de parois latérales (122) respectives,
dans lequel la première partie d'insertion (211) et la seconde partie d'insertion (212) d'un premier conducteur (210) sont disposées dans la direction circonférentielle du noyau de stator (100) ; et
chacun de la pluralité de premiers conducteurs (210) comprend, en outre, une partie de raccordement (213) raccordant la première partie d'insertion (211) et la seconde partie d'insertion (212) ;
chacun de la pluralité de premiers conducteurs (210) comprend, en outre, un premier doigt (214) raccordé à une extrémité de la première partie d'insertion (211) orientée à l'opposé de la partie de raccordement (213) et un second doigt (215) raccordé à une extrémité de la seconde partie d'insertion (212) orientée à l'opposé de la partie de raccordement (213) ;
l'unité de bobine (200a) comprend une pluralité de branches conductrices (201), chacune des branches conductrices (201) comprenant la pluralité de premiers conducteurs (210) raccordés en série, où dans deux premiers conducteurs (210) adjacents de la branche conductrice (201), le premier doigt (214) de l'un des deux premiers conducteurs (210) adjacents est raccordé au second doigt (215) d'un autre des deux premiers conducteurs (210) adjacents,
dans lequel le premier doigt (214) et le second doigt (215) en superposition sont formés de sorte qu'ils s'étendent l'un vers l'autre dans la direction circonférentielle du noyau de stator (100).

2. Stator selon la revendication 1, dans lequel la première partie d'insertion (211) et la seconde partie d'insertion (212) d'un premier conducteur (210) sont disposées dans la direction circonférentielle du noyau de stator (100) ; et
dans l'une de la pluralité d'encoches de bobinage (121), la première partie d'insertion (211) d'un premier conducteur (210) de l'unité de bobine (200a) est située sur un côté de la seconde partie d'insertion (212) d'un autre premier conducteur (210) de l'unité de bobine (200a) proche d'une paroi inférieure de l'encoche de bobinage (121) ;
et/ou
dans lequel une portée entre la première partie d'insertion (211) et la seconde partie d'insertion (212) d'un premier conducteur (210) est égale à un pas polaire.

3. Stator selon la revendication 1 ou la revendication 2, dans lequel l'au moins une unité de bobine (200a) comprend une pluralité d'unités de bobines (200a) empilées dans la direction axiale du noyau de stator (100).

4. Stator selon la revendication 1,
dans lequel la partie de raccordement (213) est située sur un côté de la première partie d'insertion (211) et de la seconde partie d'insertion (212) orienté vers un centre du noyau de stator (100).

5. Stator selon la revendication 4, dans lequel la partie de raccordement (213) comprend :
une première section de raccordement (213a) s'étendant à partir d'une extrémité de la première partie d'insertion (211) proche du centre du noyau de stator (100), la première section de raccordement (213a) étant inclinée et pliée en direction de la seconde partie d'insertion (212) ; et une seconde section de raccordement (213b) s'étendant à partir d'une extrémité de la seconde partie d'insertion (212) proche du centre du noyau de stator (100), la seconde section de raccordement (213b) étant inclinée et pliée en direction de la première partie d'insertion (211),
dans lequel la première section de raccordement (213a) est raccordée à la seconde section de raccordement (213b),
de préférence,
dans lequel la partie de raccordement (213) comprend, en outre, une section pliée (213c) raccordant la première section de raccordement (213a) et la seconde section de raccordement (213b),
ou
dans lequel le premier conducteur (210) est formé d'un seul tenant.

6. Stator selon la revendication 1, dans lequel, dans deux premiers conducteurs (210) adjacents de la branche conductrice (201), le premier doigt (214) de l'un des deux premiers conducteurs (210) adjacents est superposé et raccordé au second doigt (215) d'un autre des deux premiers conducteurs (210) adjacents dans la direction axiale du noyau de stator (100) ;
de préférence,
dans lequel le premier doigt (214) et le second doigt (215) sont soudés ensemble dans une région de superposition.

7. Stator selon la revendication 6, dans lequel une partie de superposition et de raccordement entre le premier doigt (214) et le second doigt (215) est réalisée comme une structure de raccordement (2145) ; et
l'unité de bobine (200a) comprend une pluralité de structures de raccordement (2145) agencées avec des intervalles dans la direction circonférentielle du noyau de stator (100) ;
de préférence,
dans lequel le bobinage de stator (200) comprend une pluralité d'unités de bobines (200a) empilées dans la direction axiale du noyau de stator (100) ; et
les structures de raccordement (2145) de deux unités de bobines (200a) adjacentes de la pluralité d'unités de bobines (200a) sont décalées l'une de l'autre dans la direction circonférentielle du noyau de stator (100).

8. Stator selon l'une quelconque des revendications 1, 6 ou 7, dans lequel chacun de la pluralité de premiers conducteurs (210) comprend, en outre, un premier bras de raccordement (216) et un second bras de raccordement (217), dans lequel la première partie d'insertion (211) est raccordée au premier doigt (214) par le premier bras de raccordement (216), et dans lequel le second doigt (215) est raccordé à la seconde partie d'insertion (212) par le second bras de raccordement (217) ; et
dans deux premiers conducteurs (210) adjacents dans la direction circonférentielle du noyau de stator (100), le second bras de raccordement (217) de l'un des deux premiers conducteurs (210) adjacents passe entre le second doigt (215) d'un autre premier conducteur (210) et le noyau de stator (100) ;
de préférence,
dans lequel un côté du second bras de raccordement (217) orienté à l'opposé du noyau de stator (100) comporte un renfoncement d'évitement (217a) servant à éviter le second doigt (215) de l'autre premier conducteur (210) ;
plus préférablement,
dans lequel le second bras de raccordement (217) est plié à l'endroit du second bras de raccordement (217) correspondant au renfoncement d'évitement (217a), et est formé comme une saillie (217b) s'étendant en direction du noyau de stator (100).

9. Stator selon les revendications 1 à 10, dans lequel l'unité de bobine (200a) comprend, en outre, un second conducteur (220) comprenant une partie d'insertion (2011) insérée dans l'encoche de bobinage (121).

10. Stator selon la revendication 1, dans lequel chacun de la pluralité de premiers conducteurs (210) comprend une partie d'insertion (2011) ; ou
chacun de la pluralité de premiers conducteurs (210) est plié de façon continue et comprend au moins trois parties d'insertion (2011), les au moins trois parties d'insertion (2011) de chacun de la pluralité de premiers conducteurs (210) étant respectivement insérées dans différentes encoches de bobinage (121) ;
ou
dans lequel deux surfaces d'extrémité (110) du noyau de stator (100) dans la direction axiale du noyau de stator (100) sont chacune pourvues de la pluralité d'encoches de bobinage (121) ;
ou
de préférence,
dans lequel une dimension de l'ouverture d'encoche (124) dans la direction circonférentielle du noyau de stator (100) est H1, et un espacement entre les deux surfaces de parois latérales (122) dans la direction circonférentielle du noyau de stator (100) est H2, où H1 ≥ 1,5 H2.

11. Moteur, comprenant le stator selon l'une quelconque des revendications 1 à 10.

12. Procédé de fabrication d'un stator selon la revendication 1, comprenant :
préparer (S01) un noyau de stator (100) comportant une pluralité d'encoches de bobinage (121) formées au niveau d'une surface d'extrémité (110) du noyau de stator (100) dans une direction axiale du noyau de stator (100) et agencées avec des intervalles dans une direction circonférentielle du noyau de stator (100), chacune de la pluralité d'encoches de bobinage (121) traversant radialement une paroi intérieure et une paroi extérieure du noyau de stator (100) ; et
enfoncer (S02) une unité de bobine (200a) formée par préassemblage d'une pluralité de premiers conducteurs (210) dans la pluralité d'encoches de bobinage (121) dans la direction circonférentielle du noyau de stator (100) afin d'insérer une partie d'insertion (2011) de chacun de la pluralité de premiers conducteurs (210) dans la pluralité d'encoches de bobinage (121).

13. Procédé de fabrication selon la revendication 12, comprenant, en outre, avant l'enfoncement de l'unité de bobine (200a) formée par préassemblage de la pluralité de premiers conducteurs (210) dans la pluralité d'encoches de bobinage (121) dans la direction circonférentielle du noyau de stator (100) afin d'insérer la partie d'insertion (2011) de chacun de la pluralité de premiers conducteurs (210) dans une encoche correspondante de la pluralité d'encoches de bobinage (121) :
préparer un conducteur de forme linéaire, le conducteur comprenant un fil et un revêtement isolant enveloppant le fil ;
retirer le revêtement isolant à deux extrémités du conducteur ; et
plier le conducteur afin de former le premier conducteur (210), le premier conducteur (210) comprenant deux parties d'insertion (2011) espacées l'une de l'autre,
et/ou
dans lequel le stator présente un nombre de pôles valant 2p et un pas polaire de n encoches de bobinage (121) ; et
le procédé comprenant, en outre, avant l'enfoncement (S02) de l'unité de bobine (200a) formée par préassemblage de la pluralité de premiers conducteurs (210) dans la pluralité d'encoches de bobinage (121) dans la direction circonférentielle du noyau de stator (100) afin d'insérer la partie d'insertion (2011) de chacun de la pluralité de premiers conducteurs (210) dans l'encoche correspondante de la pluralité d'encoches de bobinage (121) :
préparer 2p·n premiers conducteurs (210), chacun des 2p·n premiers conducteurs (210) comprenant une première partie d'insertion (211) et une seconde partie d'insertion (212), et une portée entre la première partie d'insertion (211) et la seconde partie d'insertion (212) étant de n encoches de bobinage (121) ;
ledit préassemblage de la pluralité de premiers conducteurs (210) pour former l'unité de bobine (200a) comprend :
préparer un mécanisme d'assemblage comprenant 2p·n rainures, les 2p·n rainures étant agencées de manière régulière dans une direction circonférentielle d'un mécanisme d'assemblage ;
empiler (2p-1)·n premiers conducteurs (210) au niveau des 2p·n rainures successivement dans un sens antihoraire ; et
insérer n premiers conducteurs (210) restants dans les rainures du mécanisme d'assemblage afin de former une unité de bobine (200a), où dans une des rainures, la première partie d'insertion (211) d'un premier conducteur (210) de l'unité de bobine (200a) est située sur un côté de la seconde partie d'insertion (212) d'un autre premier conducteur (210) de l'unité de bobine (200a) proche d'une paroi inférieure de la rainure.
